(19) **Europäisches Patentamt**
**European Patent Office**
**Office européen des brevets**

(11) **EP 3 713 759 B1**

(12) **FASCICULE DE BREVET EUROPEEN**

(45) Date de publication et mention
de la délivrance du brevet:
**11.08.2021 Bulletin 2021/32**

(21) Numéro de dépôt: **18816199.6**

(22) Date de dépôt: **20.11.2018**

(51) Int Cl.:
*B32B 5/02* (2006.01)      *B32B 5/06* (2006.01)
*B32B 5/12* (2006.01)      *B32B 5/26* (2006.01)
*B32B 7/08* (2019.01)      *B32B 27/12* (2006.01)
*B32B 27/34* (2006.01)      *B32B 1/00* (2006.01)

(86) Numéro de dépôt international:
**PCT/FR2018/052925**

(87) Numéro de publication internationale:
**WO 2019/102136 (31.05.2019 Gazette 2019/22)**

(54) **MATERIAU DE RENFORT COMPRENANT UNE COUCHE POREUSE EN UN POLYMERE THERMOPLASTIQUE PARTIELLEMENT RETICULE ET PROCEDES ASSOCIES**

VERSTÄRKUNGSMATERIAL MIT EINER PORÖSEN, AUS TEILVERNETZTEM THERMOPLASTISCHEM POLYMER HERGESTELLTEN SCHICHT UND ZUGEHÖRIGE VERFAHREN

REINFORCEMENT MATERIAL COMPRISING A POROUS LAYER MADE OF PARTIALLY CROSS-LINKED THERMOPLASTIC POLYMER AND ASSOCIATED METHODS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.11.2017 FR 1761056**

(43) Date de publication de la demande:
**30.09.2020 Bulletin 2020/40**

(73) Titulaire: **Hexcel Reinforcements**
**01120 Dagneux (FR)**

(72) Inventeurs:
• **VIARD, Andréa**
**38460 Villemoirieu (FR)**
• **BENETHUILIERE, Thibaut**
**69006 Lyon (FR)**

(74) Mandataire: **Cabinet Beau de Loménie**
**51 avenue Jean Jaurès**
**BP 7073**
**69301 Lyon Cedex 07 (FR)**

(56) Documents cités:
**EP-A1- 1 591 468      WO-A1-00/58083**
**WO-A2-2011/048340      US-A1- 2004 137 208**

**Description**

La présente invention concerne le domaine technique des matériaux de renfort, adaptés à la constitution de pièces composites. Plus précisément, l'invention a pour objet des matériaux de renfort, adaptés à la réalisation de pièces composites en association avec une résine injectée ou infusée, comprenant une couche poreuse en un polymère thermoplastique partiellement réticulé, ainsi que des procédés et utilisations associés.

La fabrication de pièces ou d'articles composites, c'est-à-dire comprenant, d'une part, un ou plusieurs renforts fibreux, notamment du type nappes fibreuses unidirectionnelles et, d'autre part, une matrice (qui est, le plus souvent, principalement de type thermodurcissable et peut inclure un ou plusieurs thermoplastiques) peut, par exemple, être réalisée par un procédé dit "direct" ou "LCM" (de l'anglais « Liquid Composite Moulding »). Un procédé direct est défini par le fait qu'un ou plusieurs renforts fibreux sont mis en œuvre à l'état "sec" (c'est-à-dire sans la matrice finale), la résine ou matrice, étant mise en œuvre séparément, par exemple, par injection dans le moule contenant les renforts fibreux (procédé "RTM", de l'anglais « Resin Transfer Moulding »), par infusion au travers de l'épaisseur des renforts fibreux (procédé "LRI", de l'anglais « Liquid Resin Infusion » ou procédé "RFI", de l'anglais « Resin Film Infusion »), ou bien encore par enduction/imprégnation manuelle au rouleau ou au pinceau, sur chacune des couches unitaires de renforts fibreux, appliquées de manière successive sur la forme.

Pour les procédés RTM, LRI ou RFI, il faut en général tout d'abord fabriquer une préforme fibreuse ou empilement de la forme de l'article fini désiré, puis imprégner cette préforme ou empilement d'une résine destinée à constituer la matrice. La résine est injectée ou infusée par différentiel de pressions en température, puis une fois que toute la quantité de résine nécessaire est contenue dans la préforme, l'ensemble est porté à une température plus élevée pour réaliser le cycle de polymérisation/réticulation et ainsi entraîner son durcissement.

Les pièces composites utilisées dans l'industrie automobile, aéronautique ou navale, sont en particulier soumises à des exigences très strictes, notamment en termes de propriétés mécaniques. Pour économiser en carburant et faciliter la maintenance des pièces, l'industrie aéronautique a remplacé de nombreux matériaux métalliques par des matériaux composites qui sont plus légers.

La résine qui est ultérieurement associée, notamment par injection ou infusion, aux renforts fibreux, lors de la réalisation de la pièce, peut être une résine thermodurcissable, par exemple du type époxy. Pour permettre un écoulement correct au travers d'une préforme constituée d'un empilement de différentes couches de renfort fibreux, cette résine est, le plus souvent, très fluide, par exemple d'une viscosité de l'ordre de 50 à 200mPa.s., voire inférieure, à la température d'infusion/injection. L'inconvénient majeur de ce type de résine est leur fragilité, après polymérisation/réticulation, ce qui entraîne une faible résistance à l'impact des pièces composites réalisées.

Afin de résoudre ce problème, il a été proposé dans les documents de l'art antérieur d'associer les couches de renforts fibreux à des couches poreuses polymériques thermoplastiques, et notamment à un non-tissé (également nommé voile) de fibres thermoplastiques. De telles solutions sont notamment décrites dans les demandes de brevet ou les brevets EP 1125728, US 6,828,016, WO 00/58083, WO 2007/015706, WO 2006/121961, US 6,503,856, US 2008/7435693, WO 2010/046609, WO 2010/061114 et EP 2 547 816, US 2008/0289743, US 2007/8361262, US 2011/9371604, WO 2011/048340. L'ajout de cette couche poreuse thermoplastique, notamment du type non-tissé permet d'améliorer les propriétés mécaniques des pièces composites obtenues, au test de compression après impact (CAI), test utilisé de manière courante pour caractériser la résistance des structures à l'impact.

Néanmoins, ces solutions présentent certains inconvénients. En effet, tout d'abord, des couches poreuses polymériques thermoplastiques utilisées ont le plus souvent une température de fusion élevée, en particulier supérieure à 150°C, ce qui rend le procédé de fabrication de ces matériaux de renfort couteux.

De plus, la matière thermoplastique polymérique constitutive de la couche poreuse peut interagir avec la résine thermodurcissable qui va ensuite être injectée ou infusée. Ceci est d'autant plus vrai que le point de fusion de la matière thermoplastique est bas. Les conséquences sont qu'elle peut modifier la stœchiométrie locale de la résine thermodurcissable et qu'elle peut se répandre dans les renforts fibreux lors de l'imprégnation de ces derniers par la résine thermodurcissable, ce que l'on veut éviter.

Pour résoudre ce problème, il a été proposé dans l'art antérieur, par la demanderesse, d'utiliser une poudre époxy telle que celle utilisée pour le tissu développé sous la référence Hexcel Primetex 43098 S 1020 S E01 1F, à la place d'une couche poreuse polymérique thermoplastique. Une telle couche thermodurcissable obtenue par dépôt d'une poudre époxy présentant une température de ramollissement de l'ordre de 100°C, permet de réaliser des pièces composites de manière plus rapide et moins couteuse, et en particulier à une température plus faible, puisqu'un préformage à basse température peut être réalisé. Néanmoins, une telle technique pose des problèmes pratiques dus à l'utilisation de poudre et surtout ne permet pas d'obtenir des propriétés en termes de résistance mécanique satisfaisantes.

La présente invention a donc pour objet de fournir de nouveaux matériaux de renfort pour la réalisation de pièces composites en association avec une résine injectée ou infusée, qui permettent de conserver les effets bénéfiques sur les performances mécaniques observées dans le cas de l'utilisation de matériaux de renfort comprenant une couche poreuse thermoplastique.

Il a, par ailleurs, été constaté que les pièces réalisées avec des matériaux intermédiaires de l'art antérieur présentaient sous cycles hygrothermiques des microfissurations susceptibles d'altérer la durabilité des structures. Or, pendant sa durée de vie, une structure aéronautique subit des cycles thermiques et des périodes d'humidification (parking dans un désert chaud, vol en haute altitude par grand froid, reprise d'humidité lors de phases statiques au sol par exemple lors de maintenance, séchage lors des vols....). Un tel phénomène peut rendre l'utilisation des matériaux de renfort de l'art antérieur peu adaptée à ce type d'applications.

Aussi, la présente invention a également pour but de proposer des matériaux de renfort qui permettent de limiter l'apparition de microfissurations dans les pièces composites réalisées ultérieurement à partir de tels matériaux, lorsque ces dernières sont soumises à des sollicitations hygrothermiques.

Dans ce contexte, la présente invention concerne un matériau de renfort comprenant au moins un renfort fibreux associé sur au moins une de ses faces à une couche poreuse polymérique, la ou les couches poreuses polymériques présentes représentant au plus 10% de la masse totale du matériau de renfort, de préférence de 0,5 à 10% de la masse totale du matériau de renfort, et préférentiellement de 2 à 6% de la masse totale du matériau de renfort. Dans le cadre de l'invention, ladite au moins une couche poreuse polymérique comprend, voire est constituée d'un polymère thermoplastique partiellement réticulé. De tels renforts, dans lesquels la masse de la part polymérique représente au plus 10% de la masse totale du matériau de renfort, sont classiquement nommés matériaux de renforts secs, par opposition notamment aux préimprégnés, qui comprennent une part plus importante de polymère et ne nécessitent pas l'ajout d'une résine externe lors de la réalisation de pièces composites et sont donc soumis à de toutes autres problématiques. Dans le cadre de l'invention, du fait du caractère partiellement réticulé de la couche poreuse présente dans le matériau de renfort, cette dernière va n'être que partiellement soluble, voire totalement insoluble, dans la résine thermodurcissable, thermoplastique ou le mélange de résines thermodurcissable et thermoplastique qui va être injecté(e) ou infusé(e) à chaud dans le matériau de renfort.

En particulier, il peut être considéré que la part thermoplastique du polymère thermoplastique partiellement réticulé composant la couche poreuse va permettre l'utilisation d'une température faible lors de la fabrication et de la mise en œuvre du matériau de renfort, et donc un gain de coût et de temps lors de la réalisation de la pièce composite, alors que la part thermodurcissable va s'opposer à la dissolution complète de la couche poreuse dans la résine thermodurcissable, thermoplastique ou le mélange de résines thermodurcissable et thermoplastique qui va ensuite être injecté(e) ou infusé(e). Etant donné que la part thermoplastique du polymère thermoplastique partiellement réticulé ne constitue qu'une partie de la couche poreuse, même si cette partie fond notamment dans une gamme allant de 80 à 130°C, ceci ne va pas rendre la couche poreuse totalement soluble dans la résine thermodurcissable, thermoplastique ou le mélange de résines thermodurcissable et thermoplastique injecté(e) ou infusé(e), puisque la part réticulée elle ne fondra pas. La présence de cette part thermoplastique a également l'avantage de permettre la fabrication du matériau de renfort associant couche(s) poreuse(s) et renfort(s) fibreux à une température compatible avec des procédés de fabrication automatisée, notamment de placement de fibres et de formage à chaud de préformes déposées à plat.

Un autre avantage est que la température de fusion de la couche poreuse, qui en fait correspond à la température de fusion de sa part thermoplastique, va pouvoir être inférieure à 150°C, permettant ainsi de réaliser toutes les étapes du procédé de fabrication préalables à l'injection de la résine nécessaire au final pour la réalisation de la pièce (de la préparation du matériau sec, en passant par sa dépose et son préformage) à une température inférieure à 150°C, voire moins.

La présente invention a donc pour objet de combiner les effets bénéfiques de l'utilisation d'une couche poreuse thermoplastique sur les performances de résistance à l'impact, tout en ayant la possibilité de réaliser l'ensemble des étapes du procédé de fabrication préalables à l'infusion ou à l'injection de la résine à des températures inférieure à 150°C, voire à 140°C, pouvant même être dans certains cas dans la gamme allant de 80 à 130°C.

L'invention a également pour objet des procédés de préparation de matériaux de renfort conformes à l'invention. En particulier, un tel procédé comprendra les étapes successives suivantes :

> a1) disposer d'un renfort fibreux,
> a2) disposer d'au moins une couche poreuse polymérique comprenant ou constituée d'un polymère thermoplastique partiellement réticulé,
> a3) procéder à l'association du renfort fibreux et de l'au moins une couche poreuse polymérique comprenant ou constituée d'un polymère thermoplastique partiellement réticulé.

Un tel procédé pourra également partir d'un matériau précurseur comprenant un renfort fibreux associé sur au moins une de ses faces à une couche poreuse polymérique comprenant ou constituée d'un polymère thermoplastique porteur de fonctions réticulables et qui permet, après réticulation d'au moins une partie des fonctions réticulables présentes sur le polymère thermoplastique, de conduire à un matériau de renfort selon l'invention. Un tel matériau précurseur fait également partie intégrante de l'invention.

Enfin, la présente invention concerne l'utilisation d'un matériau de renfort selon l'invention, pour la réalisation d'une préforme ou d'une pièce composite, en association avec une résine thermodurcissable thermoplastique ou un mélange de résines thermodurcissable et thermoplastique, ainsi qu'un procédé de fabrication d'une préforme ou d'une pièce composite à partir d'au moins un matériau de renfort selon l'invention, dans lequel une résine thermodurcissable, thermoplastique ou un mélange de résines thermodurcissable et thermoplastique est injecté ou infusé au sein dudit matériau de renfort ou d'un empilement de plusieurs matériaux de renfort selon l'invention, ainsi que les pièces et préformes obtenues par de tels procédé.

## Définitions

Par « couche poreuse », on entend une couche perméable permettant de laisser passer un liquide tel qu'une résine qui serait injectée ou infusée au travers du matériau lors de la constitution d'une préforme ou d'une pièce composite. En particulier, le facteur d'ouverture d'une telle couche déterminé selon la méthode décrite dans la demande WO 2011/086266, appartient à la gamme allant de 30 à 99%, de préférence à la gamme allant de 40 à 70%. A titre d'exemple de couche poreuse, on peut citer les films poreux, les grilles réalisées par entrecroisement de fils, les couches obtenues par dépôt de poudre, les tissus et les non-tissés. Néanmoins, dans le cadre de l'invention, quel que soit le mode de réalisation décrit, on préfèrera utiliser une couche poreuse sous la forme d'un non-tissé, également nommé voile. La couche poreuse est dite polymérique, car elle est composée d'un polymère ou mélange de polymères et contient un polymère thermoplastique partiellement réticulé. Dans la présente description, la couche poreuse polymérique pourra plus simplement être nommée « couche poreuse », par souci de simplicité. En particulier, la couche poreuse pourra être constituée uniquement d'un polymère thermoplastique partiellement réticulé ou d'un mélange d'un polymère thermoplastique partiellement réticulé et d'un polymère thermoplastique. Dans ce deuxième cas, le mélange polymère thermoplastique partiellement réticulé/polymère thermoplastique contiendra, de préférence, au moins 10 % massique de polymère thermoplastique partiellement réticulé, préférentiellement, au moins 70% massique de polymère thermoplastique partiellement réticulé, par rapport à la masse du mélange de polymère thermoplastique partiellement réticulé/polymère thermoplastique. Dans le cas d'un mélange polymère thermoplastique partiellement réticulé/polymère thermoplastique, il sera possible d'utiliser un taux élevé de réticulation dans le polymère thermoplastique partiellement réticulé, notamment de 50 à 90%, combiné à la présence du polymère thermoplastique, qui, de préférence, présentera une température de fusion dans la gamme allant de 80 à 130°C. A l'inverse, il sera, notamment, possible d'utiliser un taux faible de réticulation dans le polymère thermoplastique partiellement réticulé, notamment de 30 à 70%, combiné à la présence du polymère thermoplastique, qui, pourra alors présenter une température de fusion plus élevée, notamment supérieure à 150°C, voire supérieure à 180°C, par exemple dans la gamme allant de 180 à 400°C. La température de fusion peut être déterminée selon la norme ISO 11357-3. A titre d'exemple de polymères thermoplastiques, on peut citer les polyamides, polyesters, polyamide-imides, polyéthersulfones, polyimides, polyéthercétones, polyméthacrylates de méthyle, polyéthers aromatiques... Dans le cadre de l'invention, la matière polymérique constitutive de la couche poreuse est préférentiellement un polymère thermoplastique partiellement réticulé et non un mélange avec un polymère thermoplastique.

Le polymère utilisé dans le cadre de l'invention est dit « partiellement réticulé » car il présente une part thermoplastique correspondant à des chaînes linéaires ou ramifiées et une part réticulée formant un réseau tridimensionnel. La part réticulée est obtenue par réticulation d'un polymère thermoplastique porteur de fonctions réticulables. Lesdites fonctions réticulables sont réparties sur le polymère thermoplastique, avant l'étape de réticulation. En particulier, le polymère thermoplastique porteur de fonctions réticulables pourra se présenter sous la forme d'un polymère ramifié porteur d'une fonction réticulable en bout de chaine des ramifications.

Tout type de fonctions réticulables peuvent convenir : des fonctions réticulables sous l'action de la chaleur, sous l'action d'un rayonnement UV, gamma ou béta, ou encore celles nécessitant la présence d'un catalyseur du type péroxyde qui sera alors utilisé en mélange avec le polymère thermoplastique partiellement réticulable.

Pour des raisons pratiques, les polymères thermoplastiques partiellement réticulés obtenus par réticulation de fonctions réticulables sous l'action de la chaleur ou d'un rayonnement, et ne nécessitant pas de catalyseur chimique, seront privilégiés. De manière préférée, il sera choisi d'utiliser des fonctions réticulables sous l'action d'un rayonnement UV, gamma ou beta, qui permettent un meilleur contrôle de la réticulation. La réticulation pourra être réalisée sous atmosphère inerte ou à l'air ambiant. A titre d'exemple de fonctions réticulables sous l'action d'un rayonnement UV, gamma ou beta, on peut citer les fonctions insaturées.

De manière avantageuse, le polymère thermoplastique partiellement réticulé appartient à la famille des copolyamides, et notamment des caprolactames et/ou lauryllactames.

Des polymères thermoplastiques partiellement réticulables comprenant de telles fonctions insaturées réticulables sous l'action d'un rayonnement UV, gamma ou beta, sont notamment décrits dans la demande EP 1591468 et sont, en particulier, commercialisés par la société ARKEMA sous la référence Platamid® HX2632.

A titre d'exemple de polymère qui convient dans le cadre de l'invention, on peut citer les polymères thermoplastiques partiellement réticulés obtenus par réticulation d'un copolyamide branché à extrémités insaturées constitué de :

- au moins un motif provenant d'un monomère multifonctionnel (A) choisi parmi la diéthylène triamine, le pentaérythritol, l'acide mellitique et le 2,2-diméthylolpropionique acide,
- au moins des enchainements résultant de la condensation en présence d'un moins un monoacide insaturé utilisé comme limiteur de chaine, et
- soit d'au moins deux acides alpha,omega-aminocarboxyliques n'ayant pas le même nombre d'atomes de carbone,
- soit d'au moins deux lactames n'ayant pas le même nombre d'atomes de carbone,
- soit d'au moins un lactame, au moins un diacide carboxylique et au moins une diamine,
- soit d'un lactame et/ou d'un acide alpha,omega-aminocarboxylique n'ayant pas le même ordre d'atomes de carbone,
- soit d'une diamine et d'un diacide carboxylique,
- soit d'au moins une diamine, d'au moins un diacide carboxylique et d'au moins un acide alpha,omega-aminocarboxylique,

la proportion de (A) étant inférieure à 9% en masse de l'ensemble de (A) et des autres monomères précédemment cités.

En particulier, les enchainements du copolyamide branché à extrémités insaturées comprennent au moins du caprolactame et du lauryllactame ou bien comprennent au moins du caprolactame, de l'hexaméthylène diamine et de l'acide adipique.

Le monoacide insaturé du copolyamide branché à extrémités insaturées est, en particulier, l'acide crotonique ou l'acide undécylénique.

A titre d'exemple de polymères thermoplastiques réticulés sous l'action de la chaleur et ne nécessitant pas de catalyseur, on peut citer ceux obtenus par réticulation de copolyamides comprenant des fonctions isocyanates et époxy.

De tels polymères sont notamment décrits dans les brevets EP 1808468 et US 9205630 et sont, par exemple, commercialisés par la société Evonik sous la référence Vestamelt Hylink (X1333).

Le polymère composant la couche poreuse comprend une part thermoplastique et une part réticulée. La part thermoplastique représente, de préférence, de 30 à 90% en masse, et préférentiellement de 30 à 70 % en masse, de la masse du polymère. Ainsi, il reste une part importante de couche poreuse non réticulée, nécessaire pour la réalisation de la préforme.

La part massique que représente la part thermoplastique d'un polymère thermoplastique partiellement réticulé peut être déterminée, en solubilisant la part thermoplastique dans un solvant où elle est soluble (par exemple par immersion pendant 3 jours à température ambiante (23°C)), et en mesurant la différence de masse avant et après solubilisation (le résidu obtenu après solubilisation est, par exemple, filtré et séché à 50°C pendant 4 heures), comme exposé dans les exemples.

De manière avantageuse, la part thermoplastique du polymère partiellement réticulé présente une température de fusion appartenant à la gamme allant de 80 à 130 °C, de préférence à la gamme allant de 80 à 120°C. La température de fusion du polymère partiellement réticulé qui correspond à la température de fusion de sa part thermoplastique peut être déterminée par DSC: de l'anglais "Differential Scanning Analysis", selon la norme ISO 11357-3. Avec de telles températures de fusion, il est possible de réaliser le matériau selon l'invention, mener les opérations de dépose et de réalisation d'une préforme, pour la réalisation d'une pièce composite, à des températures inférieures à 130°C, ce qui est particulièrement avantageux sur le plan industriel.

Le polymère composant la couche poreuse peut être un polymère amorphe, mais sera, de préférence, un polymère semi-cristallin. Les polymères semi-cristallins ayant une température de transition vitreuse inférieure à leur température de fusion, leur ramollissement pourra être obtenu plus facilement, ce qui permet de les associer plus aisément par collage au renfort fibreux ou favorise la dépose et/ou le préformage du matériau de renfort selon l'invention, par la suite. De plus, les polymères semi-cristallins possèdent notamment une structure moléculaire organisée dans laquelle les chaînes sont alignées, ce qui leur confère des propriétés mécaniques supérieures aux polymères amorphes pour lesquels la structure moléculaire n'est pas organisée.

Par « renfort fibreux associé sur au moins une de ses faces à une couche poreuse », on entend que le renfort fibreux est lié à au moins une couche poreuse qui est apposée sur une des faces de ce dernier. Une telle liaison sera en particulier réalisée par collage, notamment réalisée grâce au caractère collant à chaud de la couche poreuse, du fait de sa part thermoplastique. Il est également possible, notamment dans le cas d'un empilement comprenant plusieurs renforts fibreux et plusieurs couches poreuses, que cette liaison soit complétée ou remplacée par une liaison mécanique du type couture, tricotage, ou par tout autre moyen physique (aiguilletage...).

Les matériaux de renfort selon l'invention peuvent être qualifiés de « secs » car ils sont destinés à être associés à un liant, en particulier à une résine thermodurcissable, pour la fabrication d'une pièce composite. Aussi, la masse de polymère thermoplastique partiellement réticulé composant la ou les couches poreuses du matériau de renfort selon l'invention ne représente pas plus de 10% de la masse totale du matériau de renfort selon l'invention, et représente de préférence de 0,5 à 10%, et préférentiellement de 2 à 6% de la masse totale du matériau de renfort selon l'invention.

Par « non-tissé », qui peut également être nommé « voile », on entend classiquement un ensemble de fibres continues ou courtes disposées aléatoirement. Ces non-tissés ou voiles pourront, par exemple, être produits par les procédés voie sèche (« Drylaid »), voie humide (« Wetlaid »), par voie fondue (« Spunlaid »), par exemple par extrusion (« Spunbond »), extrusion soufflage («Meltblown»), ou par filage avec solvant (« electrospinning » , « Flashspining », « Forcespinning »), bien connus de l'homme du métier. En particulier, les fibres constitutives du non-tissé peuvent présenter un diamètre moyen compris dans la gamme allant de 0,5 à 70 $\mu$m, et préférentiellement de 0,5 à 20 $\mu$m. Les non-tissés peuvent être constitués de fibres courtes ou, de préférence, de fibres continues. Dans le cas d'un non-tissé de fibres courtes, les fibres peuvent présenter, par exemple, une longueur comprise entre 1 et 100 mm. Les non-tissés offrent une couverture aléatoire et, de préférence, isotropique.

De manière avantageuse, le ou les non-tissés présent(s) dans les matériaux de renfort selon l'invention a(ont) une masse surfacique comprise dans la gamme allant de 0,2 et 20 g/m². L'épaisseur d'un non tissé dans les matériaux de renfort selon l'invention pourra varier en fonction du mode d'association au renfort fibreux. De façon préférée, le non-tissé ou chacun des non-tissés présents dans les matériaux de renfort selon l'invention a une épaisseur de 0,5 à 50 microns après association au renfort fibreux, de préférence de 3 à 35 microns, lorsque l'association se fait par application de chaleur et d'une pression, pour utiliser le caractère collant à chaud du non-tissé. Lorsque l'association se fait par un moyen mécanique, du type couture, tricotage ou aiguilletage, l'épaisseur du non-tissé pourra être supérieure à 50 microns, notamment dans la gamme allant de 50 à 200 microns. Les caractéristiques de ces non-tissés pourront être déterminées selon les méthodes décrites dans la demande WO 2010/046609.

Par « renfort fibreux », on entend une couche de fibres de renfort, pouvant se présenter sous la forme d'un tissu ou d'une nappe unidirectionnelle de fibres de renfort notamment. Les fibres de renfort sont des fibres de verre, de carbone, d'aramide, de céramiques, les fibres de carbone étant particulièrement préférées.

De manière classique, dans ce domaine, par « nappe ou couche unidirectionnelle de fibres de renfort », on entend une nappe constituée exclusivement ou quasi-exclusivement de fibres de renfort déposées selon une même direction, de manière à s'étendre de manière sensiblement parallèle les unes aux autres. En particulier, selon un mode de réalisation particulier de l'invention, la nappe unidirectionnelle ne comporte aucun fil de trame venant entrelacer les fibres de renfort, ni même de couture qui aurait pour but de donner une cohésion à la nappe unidirectionnelle avant son association avec une autre couche, et notamment avec une couche poreuse polymérique. Ceci permet en particulier d'éviter toute ondulation au sein de la nappe unidirectionnelle. Une nappe unidirectionnelle de fibres de renfort peut être constituée d'un seul fil, même si elle sera le plus souvent constituée de plusieurs fils alignés disposés côte à côte. Les fils sont disposés de manière à assurer une couverture totale ou quasi-totale sur toute la surface de la nappe. Dans ce cas, dans chacune des nappes constitutives du matériau intermédiaire, les fils sont, de préférence, disposés bord à bord, en minimisant, voire évitant tout manquement de matière (« gap » en anglais) ou chevauchement (« overlap » en anglais).

Dans la nappe unidirectionnelle, le ou les fils de renfort sont, de préférence, non associés à un liant polymérique et donc qualifiés de secs, c'est-à-dire qu'ils ne sont ni imprégnés, ni enduits, ni associés à un quelconque liant polymérique avant leur association aux couches poreuses polymériques. Les fibres de renfort sont, néanmoins, le plus souvent caractérisées par un taux massique d'ensimage standard pouvant représenter au plus 2% de leur masse. Ceci est particulièrement adapté à la réalisation de pièces composites par diffusion de résine, selon les procédés directs bien connus de l'homme de l'art.

Les fibres constitutives des renforts fibreux utilisés dans le cadre de l'invention sont, de préférence, continues. Les renforts fibreux sont en général constitués de plusieurs fils.

En particulier, un fil de carbone est constitué d'un ensemble de filaments et comporte, en général, de 1 000 à 80 000 filaments, avantageusement de 12 000 à 24 000 filaments. De façon, particulièrement préférée, dans le cadre de l'invention, des fils de carbone de 1 à 24 K, par exemple, de 3K, 6K, 12K ou 24K, et préférentiellement de 12 et 24K, sont utilisés. Par exemple, les fils de carbone présents au sein des renforts fibreux utilisés dans le cadre de l'invention présentent un titre de 60 à 3800 Tex, et préférentiellement de 400 à 900 tex. Un renfort fibreux peut être réalisé avec tout type de fils de carbone, par exemple, des fils Haute Résistance (HR) dont le module en traction est compris entre 220 et 241GPa et dont la contrainte à rupture en traction est comprise entre 3450 et 4830MPa, des fils de Module Intermédiaire (IM) dont le module en traction est compris entre 290 et 297GPa et dont la contrainte à la rupture en traction est comprise entre 3450 et 6200MPa et des Fils Haut Module (HM) dont le module en traction est compris entre 345 et 448GPa et dont la contrainte à rupture en traction est comprise entre 3450 et 5520Pa (d'après le « ASM Handbook », ISBN 0-87170-703-9, ASM International 2001).

## Matériau de renfort selon l'invention

L'invention peut être déclinée pour différents types de matériaux de renfort : des matériaux de renfort simples comprenant un seul renfort fibreux destinés à être empilés les uns sur les autres, ou bien des matériaux de renfort plus complexes comprenant plusieurs renforts fibreux sous la forme d'un empilement, qui peuvent être utilisés seuls ou également sous la forme d'empilement.

En particulier, à titre d'exemple de matériaux de renfort simples, on peut citer ceux constitués d'une nappe unidirectionnelle de fibres de renfort correspondant au renfort fibreux, associée sur au moins une de ses faces à une couche poreuse telle que prévue dans le cadre de l'invention. De manière à avoir un matériau symétrique, le renfort fibreux, et en particulier la nappe unidirectionnelle de fibres de renfort, est associé sur chacune de ses faces à une couche poreuse telle que prévue dans le cadre de l'invention et les couches poreuses présentes sur chacune des faces de la nappe unidirectionnelle de fibres de renfort sont, de préférence, identiques. Dans le cadre de l'invention, la couche poreuse présente un caractère collant à chaud et l'association du renfort fibreux et de la couche poreuse sera avantageusement réalisée grâce au caractère collant à chaud de la couche poreuse. Ce caractère collant résulte de la part thermoplastique du polymère partiellement réticulé composant la couche poreuse.

A titre d'exemple de matériaux de renfort plus complexes, on peut citer ceux constitués d'un empilement de nappes de fibres de renfort unidirectionnelles orientées selon des directions différentes, avec au moins une couche poreuse telle que prévue dans le cadre de l'invention intercalée entre deux nappes unidirectionnelles de fibres de renfort et/ou en surface de l'empilement. Selon une première variante, un tel matériau peut être constitué d'un empilement correspondant à un enchainement $(CM/R)^n$, avec CM qui désigne une couche poreuse polymérique comprenant ou constituée d'un polymère thermoplastique partiellement réticulé telle que prévue dans le cadre de l'invention, R un renfort fibreux tel que décrit dans le cadre de l'invention et n désignant un nombre entier, avec de préférence toutes les couches CM qui présentent un grammage identique, voire même qui sont identiques.

Selon une deuxième variante, un tel matériau peut être constitué d'un empilement correspondant à un enchainement $(CM/R)^n/CM$, avec CM qui désigne une couche poreuse polymérique comprenant ou constituée d'un polymère thermoplastique partiellement réticulé telle que prévue dans le cadre de l'invention, R un renfort fibreux tel que décrit dans le cadre de l'invention et n désignant un nombre entier, avec de préférence les couches poreuses externes polymériques comprenant ou constituées d'un polymère thermoplastique partiellement réticulé ayant un grammage égal au demi-grammage de chacune des couches poreuses internes polymériques comprenant ou constituées d'un polymère thermoplastique partiellement réticulé.

En particulier, dans de tels empilements, les renforts fibreux R sont des nappes unidirectionnelles de fibres de renfort, et en particulier, de fibres de carbone, de préférence de grammage identique.

De tels matériaux sont qualifiés de NCF (de l'anglais « Non-crimp fabric »). De manière classique dans ce domaine des NCF, l'association de nappes unidirectionnelles de fibres de renfort entre elles et avec la ou les couches poreuses présentes est réalisée par couture ou tricotage. Bien entendu, il pourra être prévu, de remplacer, voire de compléter cette association par couture ou tricotage, par une adhésion réalisée grâce au caractère collant à chaud de la couche poreuse, ou par tout autre moyen du type liaison physique (aiguilletage...).

En particulier, dans le cas des NCF, le matériau de renfort selon l'invention est composé de nappes unidirectionnelles s'étendant selon des orientations différentes choisies parmi les angles 0°, 30°, 45°, 60°, 90°, 120°, 135°. Toutes les nappes peuvent présenter des orientations différentes ou seulement certaines d'entre elles. A titre d'exemple, le matériau de renfort selon l'invention pourra être réalisé selon les empilements suivants : 0°/90°, 90°/0°, 45°/135°, 135°/45°, 90°/0°/90°, 0°/90°/0°, 135°/45°/135°, 45°/135°/45°, 0°/45°/90°, 90°/45°/0°, 45°/0°/90°, 90°/0°/45°, 0°/135°/90°, 90°/135°/0°, 135°/0°/90°, 90°/0°/135°, 45°/0°/135°, 135°/0°/45°, 45°/135°/0°, 0°/135°/45°, 45°/135°/90°, 90°/135°/45°, 135°/45°/0°, 0°/45°/135°, 135°/45°/90°, 90°/45°/135°, 60°/0°/120°, 120°/0°/60°, 30°/0°/150°, 150°/0°/30°, 135°/0°/45°/90°, 90°/45°/0°/135°, 45°/135°/0°/90°, 90°/0°/135°/45°, 0°/45°/135°/90°, 90°/135°/45°/90°, 90°/135°/0°/45°, 45°/0°/135°/90°, le 0° correspondant à la direction d'avancement de la machine permettant de réaliser le matériau de renfort selon l'invention. Dans le cas d'une association par couture ou tricotage, la direction générale des fils de couture ou tricotage correspondra également, en général, au 0°. La réalisation de tels multiaxiaux est connue et met en œuvre des techniques classiques par exemples décrites dans l'ouvrage « Textile Structural Composites, Composite Materials Series Volume 3 » de Tsu Wei Chou & Franck.K.Ko, ISBN 0-444-42992-1, Elsevier Science Publishers B.V., 1989, Chapitre 5, paragraphe 3.3 ou dans le brevet FR2761380 qui décrit un procédé et un dispositif pour la réalisation de nappes fibreuses multiaxiales. Notamment, les nappes unidirectionnelles peuvent être constituées avant, ou déposées en ligne, au moment de la constitution du multiaxial. La liaison par couture ou tricotage entre les différentes nappes unidirectionnelles peut être réalisée selon des points de couture ou tricotage, s'étendant sur des lignes parallèles entre elles. Notamment, les points de couture ou tricotage sont espacés, au sein d'une même ligne selon un pas, de préférence identique, de 1 à 20 mm, de préférence de 2 à 12 mm. De même, deux lignes de couture ou tricotage consécutives sont, par exemple, espacées l'une de l'autre de 2 à 50 mm, de préférence de 5 à 15 mm. De préférence, toutes les lignes consécutives de couture d'une série de lignes parallèles entre elles seront espacées d'une distance identique. A titre d'exemple de matériau constitutif du fil de couture particulièrement adapté dans le cadre de l'invention, on peut citer les polyesters (PET), les polypropylènes (PP), les polyéthylènes (PE), les polysulfures de phénylène (PPS), les polyéthylènes naphtalates (PEN), les polymères à cristaux liquides (LCP), les polycétones, les polyamides, les thermoplastiques pouvant être réticulés, le carbone, le verre, le basalte, la silice, et leur mélange. Le polyéthylène téréphtalate, polybutylène téréphtalate, polytriméthylène téréphtalate, acide polylactique et leurs copolymères sont des exemples de polyesters pouvant être mis en œuvre. Le fil présentera, par exemple, un titre dans la gamme allant de 5 à 150 dTex, notamment inférieur à 30 dTex, par exemple déterminé selon la norme EN ISO 2060. Pour plus de détails sur les constructions utilisables dans les matériaux de type NCF, on pourra se référer aux documents EP 2547816 ou WO 2010/067003 notamment.

**Matériau de renfort précurseur selon l'invention**

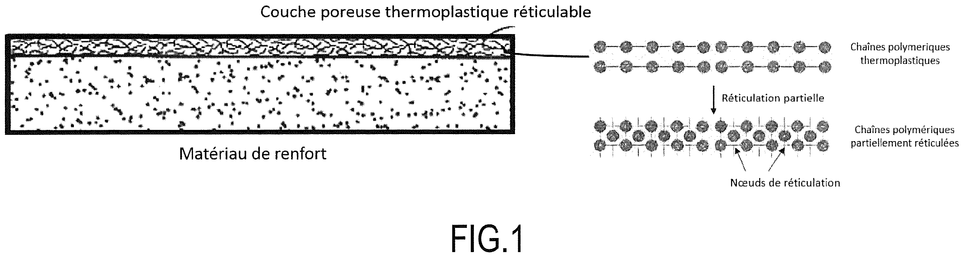

L'invention concerne également un matériau précurseur comprenant un renfort fibreux associé sur au moins une de ses faces à une couche poreuse polymérique comprenant ou constituée d'un polymère thermoplastique porteur de fonctions réticulables et qui permet, après réticulation d'au moins une partie des fonctions réticulables présentes sur le polymère thermoplastique, de conduire à un matériau de renfort selon l'invention. Ce matériau précurseur diffère du matériau selon l'invention, uniquement par le fait que le polymère n'est pas encore partiellement réticulé. Les fonctions réticulées sont donc sous forme réticulable et non réticulée. Pour le reste, les autres caractéristiques sont, en tout point, identiques à celles du matériau de renfort selon l'invention précédemment décrit. La **Figure 1** illustre la transformation d'un tel matériau de renfort précurseur comprenant un renfort fibreux associé sur une seule de ses faces à une couche poreuse thermoplastique réticulable, en un matériau de renfort selon l'invention, suite à la réticulation partielle de la couche poreuse.

**Procédé de préparation d'un matériau de renfort selon l'invention**

Dans le cadre de l'invention, la réticulation de la ou des couches poreuses peut être réalisée avant ou après que celle-ci soit déposée sur un renfort fibreux, voire associée audit renfort fibreux.

En particulier, selon une première variante, un matériau de renfort selon l'invention peut être préparé, par mise en œuvre des étapes successives suivantes :

a1) disposer d'un renfort fibreux,
a2) disposer d'au moins une couche poreuse polymérique comprenant ou constituée d'un polymère thermoplastique partiellement réticulé,
a3) procéder à l'association du renfort fibreux et de l'au moins une couche poreuse polymérique comprenant ou constituée d'un polymère thermoplastique partiellement réticulé.

En particulier, l'étape a3) pourra être obtenue par application de l'au moins une couche poreuse sur le renfort fibreux, ladite application étant accompagnée ou suivie d'un chauffage du polymère thermoplastique partiellement réticulé entraînant son ramollissement ou sa fusion, puis suivie d'un refroidissement.

Selon une deuxième variante, un matériau de renfort selon l'invention peut être préparé, par mise en œuvre des étapes successives suivantes :

b1) disposer d'un matériau précurseur selon l'invention, comprenant un renfort fibreux associé sur au moins une de ses faces à une couche poreuse polymérique comprenant ou constituée d'un polymère thermoplastique porteur de fonctions réticulables,
b2) procéder à la réticulation d'au moins une partie des fonctions réticulables présentes sur le polymère thermoplastique.

Dans ce cas, le procédé pourra comprendre les étapes successives suivantes, en amont de l'étape b1) :

c1) disposer d'un renfort fibreux,
c2) disposer d'au moins une couche poreuse polymérique comprenant ou constituée d'un polymère thermoplastique porteur de fonctions réticulables,
c3) procéder à l'association du renfort fibreux et de l'au moins une couche poreuse polymérique comprenant ou constituée d'un polymère thermoplastique porteur de fonctions réticulables.

En particulier, l'étape c3) est obtenue par application de l'au moins une couche poreuse sur le renfort fibreux, ladite application étant accompagnée ou suivie d'un chauffage du polymère thermoplastique porteur de fonctions réticulables entrainant son ramollissement ou sa fusion, mais n'entrainant pas la réticulation des fonctions réticulables, puis suivie d'un refroidissement.

De manière préférée, quelle que soit la variante choisie, les fonctions réticulables peuvent être réticulées par irradiation, notamment sous l'action d'un rayonnement UV, gamma ou beta, ou encore par chauffage.

La réticulation peut également être réalisée par addition d'un catalyseur du type peroxyde alors présent au sein de la couche poreuse. Celui-ci pourra être introduit, par dépôt, notamment par pulvérisation sur la couche poreuse.

Le mode de réticulation sera bien entendu choisi en fonction du polymère utilisé et des fonctions réticulables présentes.

La réticulation pourra être réalisée sous atmosphère inerte ou à l'air ambiant. Le plus souvent, dans le cas de réticulation UV, gamma ou beta, la réticulation est réalisée à une température appartenant à la gamme allant de 20 à 50°C.

Les conditions de réticulation seront adaptées par l'homme du métier, en fonction du polymère thermoplastique réticulable utilisé, et en fonction notamment des fonctions réticulables présentes sur ledit polymère. En particulier, dans le cas de rayonnements gamma ou beta, des doses dans la gamme allant de 25 à 300 kGy et préférentiellement de 50 à 200 kGy (kiloGray) seront adoptées, avec de préférence application d'une tension d'accélération de 80 à 300 kV (kiloelectronVolt) dans le cas des rayonnements beta.

En ajustant le taux de réticulation, notamment obtenu en modulant les paramètres du rayonnement utilisé, il est possible de contrôler le degré d'insolubilité de la couche poreuse partiellement réticulée obtenue.

Comme précédemment exposé, la réticulation peut aussi bien être menée sur une couche poreuse polymérique comprenant ou constituée d'un polymère thermoplastique porteur de fonctions réticulables, avant son association avec un renfort fibreux qu'après cette association. Néanmoins, en fonction de la technique de réticulation utilisée, et notamment dans le cas d'une réticulation par irradiation qui est plus facilement maitrisable, la technique choisie pourra dépendre du nombre de couches poreuses et de leur accessibilité.

Lorsque l'étape de réticulation est menée sur un matériau précurseur d'un matériau de renfort selon l'invention, ledit matériau précurseur comprenant un renfort fibreux associé sur au moins une de ses faces à une couche poreuse polymérique comprenant ou constituée d'un polymère thermoplastique porteur de fonctions réticulables, celle-ci peut être réalisée en dernière étape d'un procédé automatisé, en faisant notamment défiler le produit obtenu sous un rayonnement beta (également nommé « e-beam » en anglais). Dans le cas où la réticulation est activée sous rayonnement gamma, il est même envisageable de réaliser l'irradiation sur des rouleaux ou palettes de matériau précurseur.

Aussi, dans le cas de matériaux simples comprenant un seul renfort fibreux, la première ou la deuxième variante pourra être mise en œuvre, bien que la deuxième variante soit privilégiée. En fonction de la technique de réticulation utilisée (irradiation sous un rayonnement beta), il pourra être nécessaire de réaliser une irradiation sur les deux faces du matériau, les fibres de renfort jouant le rôle d'écran contre les rayonnements.

Dans le cas de matériaux plus complexes comprenant au moins une couche poreuse entre deux renforts fibreux, et en particulier, dans le cas des NCF, la première variante sera, de préférence, mise en œuvre, notamment dans les cas où la réticulation est menée sous irradiation avec un rayonnement beta.

Bien entendu, quel que soit le procédé de préparation utilisé, la couche poreuse et le matériau de renfort seront choisis, de façon qu'au final, la ou les couches poreuses polymériques représentent au plus 10% de la masse totale du matériau de renfort, de préférence de 0,5 à 10% de la masse totale du matériau de renfort, et préférentiellement de 2 à 6% de la masse totale du matériau de renfort obtenu.

### Utilisation et procédé utilisant un matériau de renfort selon l'invention pour la fabrication d'une préforme ou d'une pièce composite

Les matériaux de renfort de l'invention comprenant un renfort fibreux associé sur au moins une de ses faces à une couche poreuse polymérique comprenant ou constituée d'un polymère thermoplastique porteur de fonctions réticulables sont parfaitement adaptés, pour la réalisation d'une préforme ou d'une pièce composite, en association avec une résine thermodurcissable, thermoplastique ou un mélange de résines thermodurcissable et thermoplastique.

De manière classique, dans un procédé de fabrication d'une préforme ou d'une pièce composite à partir d'au moins un matériau de renfort selon l'invention, une résine thermodurcissable, thermoplastique ou un mélange de résines thermodurcissable et thermoplastique est injecté(e) ou infusé(e) au sein dudit matériau de renfort ou d'un empilement de plusieurs matériaux de renfort.

Dans le cadre de l'invention, du fait de la présence d'une part thermoplastique dans la couche poreuse présente dans le matériau de renfort, préalablement à l'infusion ou à l'injection de la résine, un dépôt ou une mise en forme utilisant le caractère collant à chaud de ladite au moins une couche poreuse présente dans le matériau de renfort pourra être mise en œuvre. De manière avantageuse, les procédés de fabrication d'une préforme ou d'une pièce composite, comprennent une étape de dépose ou de mise en forme d'un matériau selon l'invention, dans laquelle, la couche poreuse est chauffée à une température entrainant la fusion au moins partielle de la ou des couches poreuses définie(s) dans le cadre de l'invention, et en particulier à une température appartenant à la gamme allant de 80 à 130 °C, de préférence à la gamme allant de 80 à 120°C.

Les étapes utilisées pour la fabrication de la pièce composite sont tout à fait classiques pour l'homme du métier. Il est possible de réaliser une préforme plane, voire une préforme selon une forme tridimensionnelle souhaitée. En particulier, le dépôt d'un matériau de renfort selon l'invention peut être réalisé en continu avec application d'une pression perpendiculaire à la surface de dépose afin de l'appliquer sur celle-ci. De tels procédés connus sous les abréviations AFP (de l'anglais Automated Fiber Placement, Placement automatique de fibres) ou ATL (de l'anglais Automated Tape Lay-up, Mise en place automatique de ruban) sont, par exemple, décrits dans les documents WO 2014/076433 A1 ou WO 2014/191667. Différentes bandes de matériau selon l'invention peuvent être déposées les unes à côtés des autres selon des trajectoires de dépose parallèles ou non, en fonction de la préforme à réaliser, de manière à former une succession de plis déposés les uns sur les autres. De manière concomitante avec la dépose, la matière thermoplastique de la couche poreuse est activée, c'est-à-dire ramollie, de manière à utiliser le caractère collant à chaud de la matière. Lorsqu'un pli est entièrement déposé, l'orientation est modifiée, afin de déposer le pli suivant selon une trajectoire de dépose différente au pli précédent. Chaque bande est déposée parallèlement ou non (selon la géométrie de la pièce à réaliser) à la bande précédente, avec ou sans espace inter-bande et avec un collage sur l'intégralité de la surface. Ce procédé de dépose est, plus particulièrement, adapté à des largeurs de matériau de renfort comprises entre 3 et 300 mm, avec, de préférence, de faible variation en largeur (< 0,25mm). Dans le cas où le matériau de renfort présente une largeur plus large, il pourra être déposé par tout autre moyen adapté.

Notamment, la fabrication de la pièce composite met en œuvre, en tant qu'étapes finales, une étape de diffusion, par infusion ou injection, d'une résine thermodurcissable, thermoplastique ou d'un mélange de résines thermodurcissable et thermoplastique au sein du matériau de renfort ou d'un empilement de matériaux de renfort selon l'invention, suivie d'une étape de consolidation de la pièce souhaitée par une étape de polymérisation/réticulation suivant un cycle défini en température et sous pression, et d'une étape d'un refroidissement. Selon un mode de réalisation particulier, adapté par ailleurs à toutes les variantes de mise en oeuvre décrites en relation avec l'invention, les étapes de diffusion, consolidation et refroidissement sont mises en œuvre dans un moule ouvert ou fermé.

En particulier, une résine diffusée au sein du matériau de renfort ou d'un empilement de matériaux de renfort selon l'invention peut être de nature thermoplastique ou de préférence thermodurcissable, ou constituée d'un mélange de résines thermodurcissable et thermoplastique. A titre d'exemple de résine thermoplastique, on peut citer les polyamides, polyesters, polyamide-imides, polyéthersulfones, polyimides, polyéthercétones, polyméthacrylates de méthyle, polyéthers aromatiques... Les résines thermodurcissables utilisables sont, en particulier, choisies parmi les époxydes, les polyesters insaturés, les vinylesters, les résines phénoliques, les polyimides, les bismaléimides, les résines phénol-formaldéhydes, urée-formaldéhydes, les 1,3,5-triazine-2,4,6-triamines, les benzoxazines, les esters de cyanates, et leurs mélanges. Une telle résine pourra également comprendre un ou plusieurs agents durcisseurs, bien connus de l'homme du métier pour être utilisés avec les polymères thermodurcissables sélectionnés. En particulier, l'invention sera mise en œuvre avec une résine thermodurcissable, et notamment une résine époxy.

L'invention, utilisera de préférence, une infusion sous pression réduite, notamment sous une pression inférieure à la pression atmosphérique, notamment inférieure à 1 bar et, de préférence, comprise entre 0,1 et 1 bar, de la résine thermodurcissable pour la réalisation de la pièce composite. L'infusion sera, de préférence, réalisée dans un moule ouvert, par exemple par infusion sous bâche à vide.

La pièce composite est obtenue au final après une étape de traitement thermique. En particulier, la pièce composite est obtenue généralement par un cycle de consolidation classique des polymères considérés, en effectuant un traitement thermique, recommandé par les fournisseurs de ces polymères, et connu de l'homme du métier. Cette étape de consolidation de la pièce souhaitée est réalisée par polymérisation/réticulation suivant un cycle défini en température et sous pression, suivie d'un refroidissement. Dans le cas de résine thermodurcissable, on a le plus souvent une étape de gélification de la résine avant son durcissement. La pression appliquée lors du cycle de traitement est faible dans le cas de l'infusion sous pression réduite et plus forte dans le cas de l'injection dans un moule RTM.

Les exemples ci-après, en référence aux Figures annexées, permettent d'illustrer l'invention, mais n'ont aucun caractère limitatif.

La **Figure 1** présente très schématiquement la réticulation partielle de la couche poreuse d'un matériau de renfort précurseur présenté en coupe et comprenant un renfort fibreux associé sur une seule de ses faces à une couche poreuse thermoplastique réticulable, conduisant à un matériau de renfort selon l'invention, comprenant alors renfort fibreux associé à une couche poreuse thermoplastique partiellement réticulée.

La **Figure 2** présente schématiquement le procédé utilisé dans les exemples pour la fabrication de matériaux de renfort, dits « UD voilés ».

La **Figure 3** présente le taux de réticulation obtenu pour un voile HX2632 et un matériau UD voilé réalisé avec un tel voile, en fonction de la dose d'irradiation beta appliquée.

Les **Figures 4** à **6** présentent des images obtenues sous microscopie optique, lorsque différents voiles et de la résine sont placés entre deux lames de verre, et soumis ou non à un chauffage.

Les **Figures 7** et **8** présentent des courbes DMA obtenues sur différentes éprouvettes résine/voile selon la norme EN 6032 (1Hz, 1°C/min, Amplitude 15 $\mu$m).

La **Figure 9** présente la courbe de comportement en fusion du voile HX2632 après irradiation sous un rayonnement beta de 100 kGy par DSC, selon la norme ISO 11357-3.

La **Figure 10** illustre schématiquement un procédé de dépose d'un matériau de renfort.

La **Figure 11** illustre schématiquement le test de pelage utilisé dans les exemples.

La **Figure 12** illustre schématiquement un procédé de préformage pour la réalisation d'une préforme non plane.

La **Figure 13** montre où est réalisée la mesure de diamètre mentionné dans le **Tableau 5.**

La **Figure 14** présente le cycle hygrothermique utilisé dans l'étude du comportement aux microfissurations rapportée dans les exemples.

La **Figure 15** présente le plan de découpe utilisé lors de la préparation des échantillons dans les exemples, pour étudier la présence éventuelle de microfissurations.

La **Figure 16** présente les densités de microfissures obtenues dans des stratifiés réalisés avec des matériaux selon l'invention ou selon l'art antérieur.

La **Figure 17** est une image obtenue sous microscopie optique d'un stratifié obtenu avec un matériau de l'art antérieur.

La **Figure 18** présente l'image obtenue sous microscopie électronique, de la poudre Hylink et de la résine RTM6 placées entre deux lames de verre, après chauffage jusqu'à 180°C.

La **Figure 19** montre les courbes DMA obtenues sur différentes éprouvettes résine/voile ou résine/poudre selon la norme EN 6032 (1Hz, 1°C/min, Amplitude 15 $\mu$m).

## Matériaux/Produits utilisés

Les couches poreuses selon l'invention ont été réalisées avec :

1) Soit un voile de fibres en un polymère Platamid® HX2632 commercialisé par la société Arkema (copolyamide présentant des insaturations terminales permettant d'obtenir un réseau tridimensionnel sous traitement UV, gamma ou beta,) qui présente une température de fusion de 117°C - ce voile (nommé par la suite voile HX2632) est obtenu par fusion-soufflage (« meltblown » en anglais) et a une masse surfacique de 4 g/m$^2$ et une épaisseur de 100 $\mu$m avant contre-collage sur le renfort fibreux. Le diamètre des fibres qui le constituent est de 15 $\mu$m. Le facteur d'ouverture d'une telle couche déterminé selon la méthode décrite dans la demande WO 2011/086266, est de 50 +/- 10%.

2) Soit par dépôt d'une poudre copolyamide thermoplastique réticulable en température du fait de la présence de fonctions époxy et isocyanate, permettant la création d'un réseau tridimensionnel en T, Vestamelt Hylink (X1333) commercialisé par Evonik qui présente une température de fusion de 123°C. La réticulation peut quant à elle être initiée à une température de 150°C.

Les couches poreuses utilisées à titre de comparaison ont été réalisées avec :

1) Soit un voile thermoplastique 1R8D04 commercialisé par la société Protechnic (66, rue des Fabriques, 68702 - CERNAY Cedex - France) qui présente une température de fusion de 160°C - ce voile (nommé par la suite voile 1R8D04) est obtenu par fusion-soufflage (« meltblown » en anglais) et a une masse surfacique de 4 g/m$^2$ et une épaisseur de 100 $\mu$m avant contre-collage sur le renfort fibreux. Le diamètre des fibres qui le constituent est de 15 $\mu$m. Le facteur d'ouverture d'une telle couche déterminé selon la méthode décrite dans la demande WO 2011/086266, est de 50 +/- 10%.

2) Soit un voile de fibres en un polymère thermoplastique PA11 LMNO commercialisé par la société Arkema qui présente une température de fusion de 188°C - ce voile (nommé par la suite voile PA11 LMNO) est obtenu par fusion-soufflage (« meltblown » en anglais) et a une masse surfacique de 4 g/m$^2$ et une épaisseur de 100 $\mu$m avant contre-collage sur le renfort fibreux. Le diamètre des fibres qui le constituent est de 15 $\mu$m. Le facteur d'ouverture d'une telle couche déterminé selon la méthode décrite dans la demande WO 2011/086266, est de 50 +/- 10%.

3) Soit par dépôt d'une couche de poudre époxy utilisée dans le tissu Hexcel Primetex 43098 S 1020 S E01 1F. Le diamètre moyen de la poudre est de 51 $\mu$m (D50, valeur médiane), sa transition vitreuse se situe dans la gamme allant de 54 à 65°C.

Les renforts fibreux utilisés dans tous les cas sont des unidirectionnels de fibres de carbone commercialisées par la demanderesse sous la référence IMA 12K. Les propriétés de ces fibres 12K sont résumées dans le **Tableau 1** ci-après :

**Tableau 1**

|  | Hexcel IMA 12K |
|---|---|
| force de tension (MPa) | 6,067 |
| module de tension (GPa) | 297 |
| élongation finale à la rupture (%) | 1,8 |

(suite)

|  | Hexcel IMA 12K |
|---|---|
| densité (g/cm$^3$) | 1,79 |
| poids/longueur (g/m) | 0,445 |
| diamètre des filaments ($\mu$m) | 5,1 |

Les résines thermodurcissables utilisées pour la réalisation de pièces composites sont les résines époxy RTM6 et RTM230ST commercialisées par la société Hexcel Composites, Dagneux France.

### Mesures réalisées

DSC: de l'anglais "Differential Scanning Analysis". Les analyses ont été réalisées sur un appareil Q2000 de TA Instruments, Guyancourt, France.
DMA: de l'anglais "Dynamic Mechanical Analysis". Les analyses ont été réalisées sur un appareil Q800 de TA Instruments, Guyancourt, France.
Analyse au microscope à chaud : Les analyses ont été réalisées sur un Imageur Axio M2m Microscope de Zeiss, Marly-le-Roi, France, équipé d'un dispositif de chauffage de Linkam Scientific Instruments, Tadworth, UK.
Rhéologie : Les analyses de viscosité ont été réalisées sur un rhéomètre HAAKE Mars de Thermofisher Scientific, Courtaboeuf, France.

### Contrecollage des voiles - Obtention d'un matériau de renfort dit UD voilé

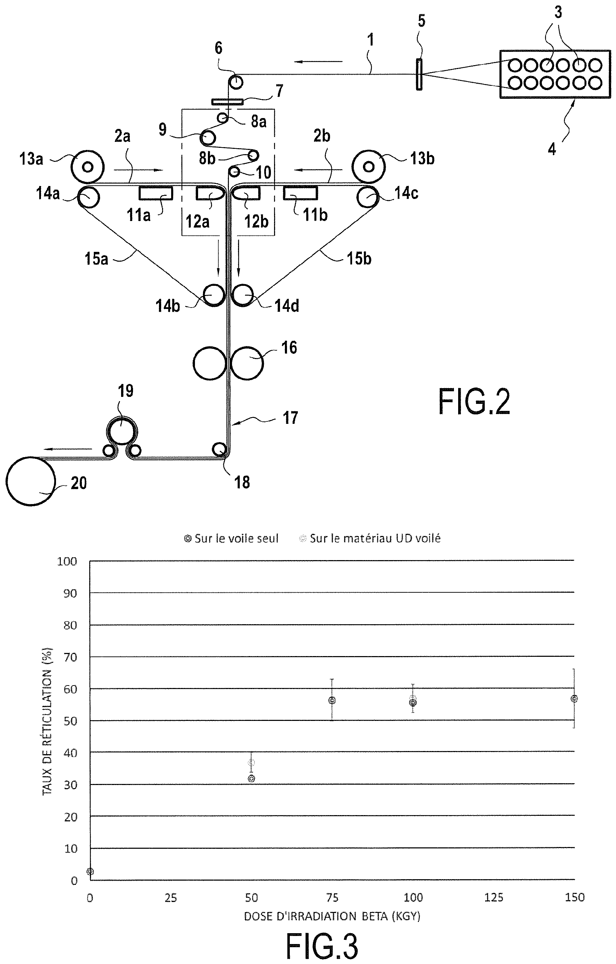

Le voile est contrecollé directement de chaque côté des nappes unidirectionnelles de fibres de carbone grâce à une machine (Figure 2) spécifiquement dédiée à cet effet et ce juste après la formation de la nappe au grammage souhaité. Les fils de carbone 1 sont déroulés à partir de bobines de carbone 3 fixées sur un cantre 4, passent au travers d'un peigne 5, sont conduits dans l'axe de la machine à l'aide d'un rouleau de guidage 6 et d'un peigne 7, d'une barre de guidage 8a. Les fils de carbone sont préchauffés à l'aide d'une barre chauffante 9 et sont étalés ensuite grâce à la barre d'étalement 8b et la barre chauffante 10 à la masse surfacique de carbone souhaitée de la nappe unidirectionnelle 17. Les rouleaux de voiles 13a et 13b sont déroulés sans tension et transportés à l'aide de tapis continus 15a et 15b fixés entre les rouleaux libres en rotation 14a, 14b, 14c, 14d et les barres chauffées 12a, 12b. Les voiles 2a et 2b sont préchauffés dans les zones 11a et 11b avant d'être en contact avec les fils de carbones 1 et contrecollés de part et d'autre de deux barres chauffées 12a et 12b dont l'entrefer est contrôlé. Une calandre 16, qui peut être refroidie, applique ensuite une pression sur la nappe unidirectionnelle avec un voile de chaque côté 17. Un rouleau de renvoi 18 permet de rediriger le produit 17 vers le système de traction comprenant un trio d'appel 19 puis d'enroulage 20 piloté par un moteur pour former un rouleau constitué du matériau 17 ainsi formé.

Les conditions d'essais pour la fabrication des nappes unidirectionnelles de carbone combinées avec un voile de chaque côté (nommé « UD voilé ») sont indiquées dans le Tableau 2 ci-après.

Tableau 2 : Paramètres de procédé pour la mise en œuvre des nappes unidirectionnelles associées à un voile de chaque côté

| Voile | Masse surfacique mesurée de l'unidirectionnel (g/m$^2$) | Vitesse ligne (m/min) | T barre (°C) (9) | T barre (°C) (10) | T préchauffage voile (°C) (11a & 11b) | T barres (°C) (12a & 12b) |
|---|---|---|---|---|---|---|
| voile HX2632 | 210 | 2,4 | 60 | 65 | 85 | 100 |
| voile 1R8D04 | 210 | 2,4 | 200 | 200 | 160 | 180 |
| Voile PA11 LMNO | 210 | 2,4 | 200 | 200 | 160 | 180 |

## A. ESSAIS REALISES AVEC UTILISATION DE VOILES

### I. Influence de l'irradiation appliquée sur la part réticulée obtenue

Le voile HX2632 est traité avec différentes radiations beta (appareillage COMET, Flamatt, Suisse, tension d'accélération de 150 kiloelectronVolt- kV et doses d'irradiation de 50 et 100 kiloGray - kGy).

L'irradiation est menée avant association du voile à l'unidirectionnel. Les copolyamides thermoplastiques étant solubles dans l'acide formique, la part réticulée est déterminée de la façon suivante : les voiles ou l'UD voilé obtenu(s) à l'issue de ces irradiations sont immergés dans l'acide formique pendant 3 jours à température ambiante (23°C), puis le résidu obtenu est filtré et séché à 50°C pendant 4h. La **Figure 3** montre l'évolution du % massique que représente ce résidu (correspondant donc à la part réticulée), par rapport à la masse totale du voile obtenu après réticulation. Les résultats obtenus sont les mêmes que l'irradiation soit réalisée sur le voile seul ou sur une association voile/unidirectionnel.

Il apparait que la part réticulée varie de 30 à 60% et varie, en fonction des conditions d'irradiation utilisées.

### II. Influence de la réticulation sur la solubilité dans la résine RTM6

Le voile HX2632, avant irradiation, et de la résine époxy RTM6 appliquée sur le voile sont placés entre deux lames de verre, le tout étant lui-même placé sous microscope optique. L'ensemble est alors soumis à une montée en température de 2°C/min jusqu'à une température de 180°C, correspondant à la température finale lors de l'infusion ou de l'injection de la résine lors de la réalisation d'une pièce composite. Il s'agit donc du cycle critique pour la tenue du voile en température, puisqu'aucune étape de pré-réticulation de la résine n'est employée.

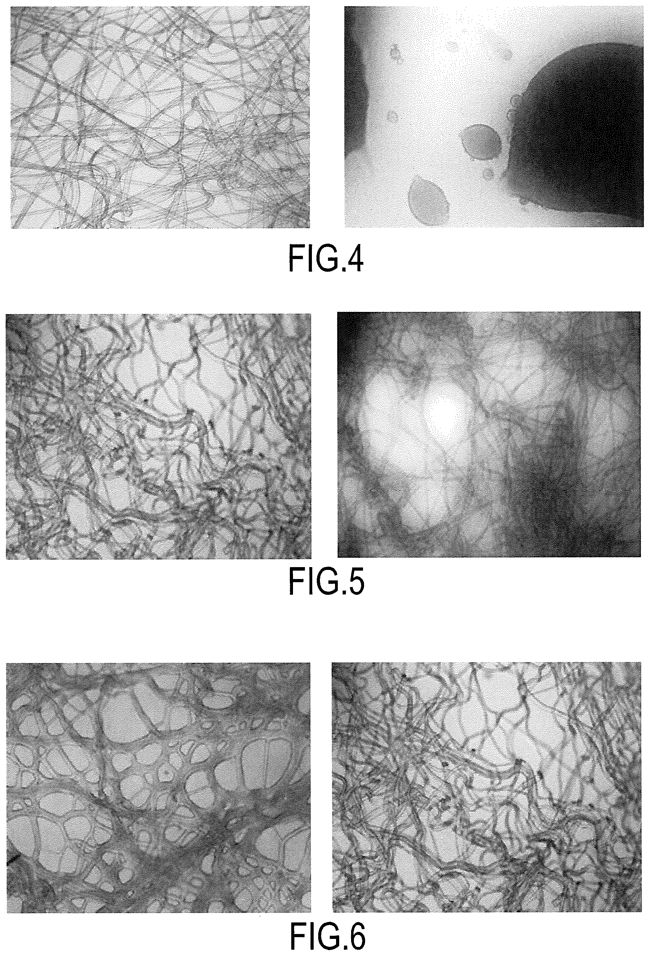

La **Figure 4** présente l'image obtenue à 23°C (à gauche) et à 180°C donc post-réticulation de la résine (à droite). Il apparait donc que le voile se dissout dans la résine lorsqu'il n'est pas partiellement réticulé.

La **Figure 5** présente l'image obtenue à 180°C lorsque le voile utilisé est le voile HX2632 soumis à une irradiation de 100 kGy de rayons beta, avec utilisation de deux résines thermodurcissables : RTM6 (à gauche), et RTM230ST (à droite). Il apparaît donc que la réticulation obtenue rend le voile insoluble dans ces deux résines.

La **Figure 6** montre, quant à elle, l'évolution de cette insolubilité en fonction du taux de réticulation : traitement 50 kGy de rayons beta (35+/-5 en masse de part réticulée) (à gauche), traitement sous 100 kGy de rayons beta (57+/-5 en masse de part réticulée) (à droite). Les taux de réticulation sont obtenus en effectuant la moyenne arithmétique sur six mesures et l'écart-type est défini comme étant la moyenne quadratique des écarts à la moyenne

$$\left( \sqrt{\frac{1}{n}\sum_i (x_i - \bar{x})^2} \right).$$ L'augmentation de la part réticulée permet donc d'augmenter et de contrôler également la part insoluble du voile.

Il ressort des photographies présentées que la présence de la part réticulée de la couche poreuse permet de garder l'intégrité du voile dans la résine liquide et semble réduire la mobilité moléculaire de la partie thermoplastique.

### III. Influence de la réticulation étudiée par DMA

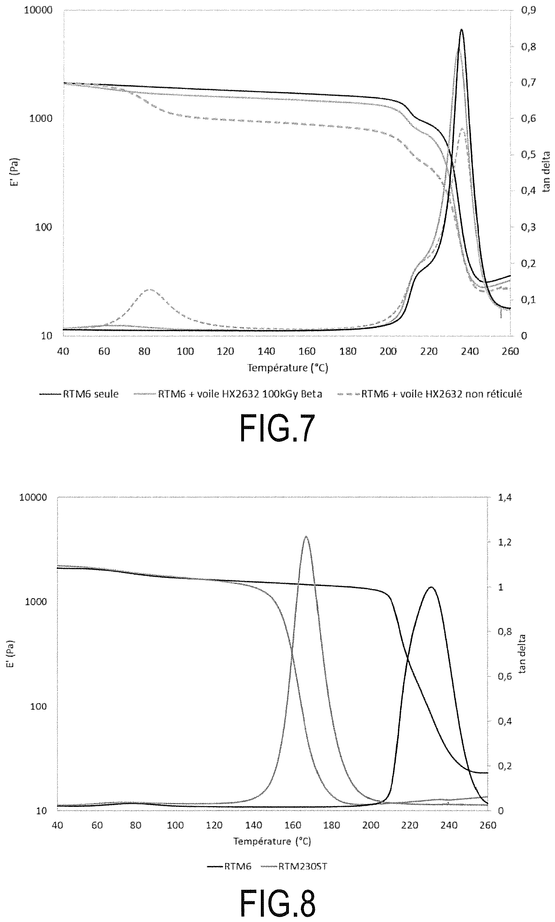

Ces résultats peuvent être corrélés aux courbes DMA (obtenues selon la norme EN 6032) sur les échantillons RTM6 / voile. Ces échantillons ont été préparés par imprégnation du voile maintenu verticalement au sein d'un moule métallique. Une fois l'imprégnation par la résine RTM6 effectuée, les échantillons ont été prépolymérisés à 120 ° C pendant 45 minutes, suivis d'une post-cuisson de 2 heures à 180 ° C. Comme on peut le voir sur la **Figure 7** (Analyse DMA, 1Hz, 1°C/min - Amplitude 15 $\mu$m), la dose d'irradiation appliquée sur le voile a une grande influence sur les propriétés thermomécaniques symbolisées par les résultats DMA : en augmentant le taux de réticulation, il est possible de maintenir la performance thermomécanique du matériau jusqu'à la transition vitreuse du réseau époxy-amine de la résine RTM6, et la contribution thermoplastique est négligeable (Dose de 100 kGy en faisceau d'électrons Beta). De l'autre côté, sans réticulation, la transition thermoplastique est clairement visible à environ 80 ° C et entraîne une diminution des propriétés thermomécaniques. Ceci confirme les résultats obtenus en microscopie optique et montre qu'en irradiant le voile, il est possible de contrôler les interactions entre le voile et la résine époxy.

C'est là tout l'intérêt de l'invention, puisqu'il apparait qu'une fois traité sous 100 kGy de rayonnements Beta, le voile HX2632 n'impacte pas les propriétés thermomécaniques de la résine thermodurcissable, malgré son faible point de fusion.

Par ailleurs, la **Figure 8** obtenue avec le voile HX2632 soumis à une irradiation de faisceau d'électrons (rayonnements Beta) de 100 kGy montre que ces observations sont confirmées quelle que soit la résine utilisée : RTM6 ou

EP 3 713 759 B1

RTM230ST.

## IV. Etude par DSC

La dernière étape pour bien comprendre le comportement du voile après irradiation a été de vérifier qu'il était encore capable de fondre après irradiation. Aussi, il a été vérifié dans le cas des voiles les plus réticulés (part réticulé représentant 57 % en masse, obtenue après irradiation sous faisceau d'électrons de 100 kGy et 35 % en masse, obtenue après irradiation sous faisceau d'électrons de 50 kGy), que la partie réticulée présente dans le voile n'empêchait pas la fusion ultérieure du voile.

En effet, le fait que le voile garde un caractère collant à chaud est nécessaire pour sa liaison ultérieure à l'unidirectionnel, et lors de la mise en forme, notamment pour la réalisation de préforme.

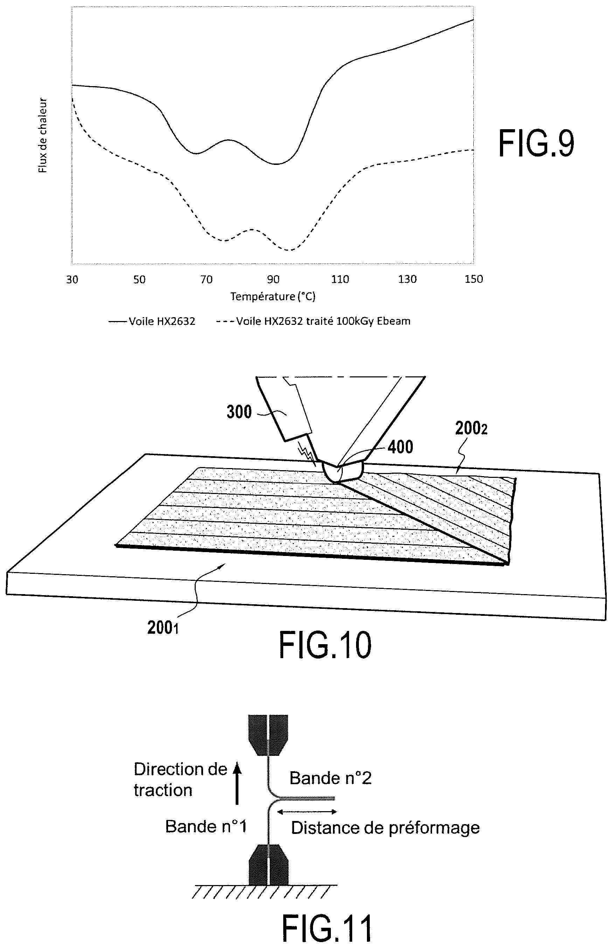

Le comportement en fusion du voile après irradiation a été observé par DSC, selon la norme ISO 11357-3. Les courbes obtenues et présentées **Figure 9** montrent que l'irradiation par faisceau d'électrons beta conduit à une légère différence en termes de point de fusion du voile, mais qui se produit de toute façon autour de 100 ° C. Ce bas point de fusion est très avantageux, en termes de temps et de coûts, et va permettre d'abaisser la température qui va être utilisée, lors de l'étape de formage ultérieure pour la réalisation de préforme, qui est généralement effectuée, dans l'art antérieur, à des températures supérieures à 150 ° C.

## V. Etudes réalisées sur les matériaux de renfort selon l'invention

1) Réticulation sur un UD voilé

Des mesures du niveau de réticulation ont été effectuées sur l'UD voilé avec un voile HX2632 contrecollé de chaque côté de l'unidirectionnel, selon les conditions du **Tableau 2.** La tension appliquée pour l'irradiation par faisceau d'électrons était de 150 kV et la dose appliquée était de 100 kGy. Comme la fibre de carbone ne réagit pas à l'irradiation mais peut constituer une barrière pour les rayonnements en raison de sa densité, l'influence du traitement sur un seul ou sur les deux côtés du matériau a été évaluée. Le matériau UD voilé irradié par faisceau d'électrons (rayonnement beta) a été immergé dans de l'acide formique pendant 3 jours, puis filtré et séché pour évaluer le taux de réticulation, comme précédemment décrit.

Les résultats sont résumés dans le **Tableau 3** ci-après et comparés avec le niveau de réticulation obtenu en irradiant le voile seulement. Il apparait que les résultats obtenus sont similaires sur les deux matériaux, confirmant que le traitement peut être effectué à deux étapes différentes du procédé : sur le voile seulement, en amont de son association à l'unidirectionnel ou sur l'UD voilé. Cependant pour ce dernier, le traitement doit être fait des deux côtés du matériau en raison de la densité des fibres de renfort, en fonction du mode de réticulation utilisé (irradiation sous faisceau d'électrons). Dans le cas d'une irradiation gamma, un traitement sur une seule face est suffisant.

**Tableau 3** donnant le % de part réticulée en masse obtenue sur la masse totale de la couche poreuse considérée

|  | UD voilé | Voile |
|---|---|---|
| 100 kGy faisceau d'électrons (une seule face) | 22 +/- 6 | 59 +/- 5 |
| 100 kGy faisceau d'électrons (sur les deux faces) | 57 +/- 5 | |

2) Mise en place et préformage

2.1) Mise en place

Le dépôt de l'UD voilé est réalisé en continu avec application d'une pression perpendiculaire à la surface de dépose afin de l'appliquer sur celle-ci. De tels procédés connus sous les abréviations AFP (de l'anglais Automated Fiber Placement, Placement automatique de fibres) ou ATL (de l'anglais Automated Tape Lay-up, Mise en place automatique de ruban) sont par exemple décrits dans les documents WO 2014/076433 A1 ou WO 2014/191667 et illustrés **Figure 10.** Différentes bandes de matériau intermédiaire sont déposées les unes à côté des autres selon des trajectoires de dépose parallèles, de manière à former des plis $200_1, 200_2$ ... Le dispositif **300** permet d'activer la matière thermoplastique (voile, poudre...), c'est-à-dire d'utiliser le caractère collant à chaud de la matière, et est solidaire de l'organe de dépose **400.** Celui-ci est déplacé pour déposer les différentes bandes de matériau qui sont découpées en fin de trajectoire. Lorsqu'un pli est entièrement déposé, l'orientation est modifiée afin de déposer le pli suivant selon une trajectoire de dépose différente au pli précédent. Chaque bande est déposée parallèle à la bande précédente, sans espace inter-bande et avec un collage sur l'intégralité de la surface.

Un tel procédé a pu être appliqué avec succès avec les matériaux selon l'invention. En particulier, les conditions suivantes ont été utilisées :

- Matériaux de renfort UD voilés utilisés : unidirectionnel contre-collé sur chacune de ses faces avec un voile HX2632, puis soumis à un rayonnement Beta de 50 kGy ou à un rayonnement Beta de 100 kGy, sur chacune de ses faces.

- Puissance et vitesse de dépose réalisée avec une machine FANUC M16iB, commercialisée par la société FANUC (Japon) **Tableau 4** :

|  | Puissance de dépose (Watts) | Vitesse de dépose (mm/s) |
|---|---|---|
| Voile HX2632 | 830 | 430 |
| Voile 1R8D04 | 1000 | 370 |

- Orientation et nombre de plis : [(45/0/90/135/0)]$_2$.

Dans le cas d'une activation d'un matériau thermodurcissable de type poudre époxy utilisé dans l'art antérieur, l'avantage principal est la température d'activation du matériau qui est de l'ordre de 100°C. En revanche, ce type de matériau entraîne généralement un encrassement de l'organe de dépose 400. C'est pourquoi des matériaux thermoplastiques, par exemple sous forme de voile (tels que ceux cités dans WO 2010/046609), sont généralement préférés, mais ceux utilisés dans l'art antérieur s'activent à des températures supérieures à 150°C.

Le matériau de renfort UD voilé de l'invention avec un voile HX2632 propose de répondre à la problématique d'activation du matériau à des températures inférieures à 150°C, et ce même s'il possède un matériau thermoplastique partiellement réticulé. En particulier, le matériau UD voilé avec un voile HX2632 réticulé sur chacune des faces de la nappe de carbone peut être déposé à des températures comprises entre 80 et 130°C, plus particulièrement entre 100 et 120°C, permettant de réduire de 20 à 40% la puissance nécessaire à la dépose du matériau par comparaison à un voile thermoplastique classique et d'accélérer la vitesse de dépose, notamment lors des nombreuses phases d'accélération du moyen de dépose (économies d'énergie). Le taux de réticulation du voile thermoplastique n'influe pas sur ces résultats, la part thermoplastique résiduelle permettant d'assurer le caractère thermoliant du matériau, et ce quelle que soit la quantité. Plus particulièrement, les mêmes paramètres de dépose peuvent être employés avec un pourcentage thermoplastique compris entre 30 et 70% en masse après réticulation du voile HX2632. Ces résultats confirment que la présente invention permet de mener les opérations de dépose de manière particulièrement avantageuse sur le plan industriel.

La qualité de la dépose du matériau a été évaluée grâce à un test de pelage non normé qui est utilisé à titre comparatif. Le montage de pelage est indiqué **Figure 11.** Pour se faire, deux bandes de matériau UD voilé sont associées parallèlement l'une à l'autre en utilisant la puissance et la vitesse de dépose spécifiées précédemment. Le duo ainsi formé est pelé en traction à une vitesse arbitraire de 50 mm/min sur une distance de 200mm (distance de préformage mentionnée **Figure 11**), afin de mesurer la force générée par le pelage. La qualité de la dépose est ainsi évaluée en mesurant la moyenne de la force de pelage générée sur 200 mm. Les résultats présentés dans le **Tableau 5** comparent ainsi la qualité de la dépose entre un matériau de renfort UD voilé avec un voile thermoplastique 1R8D04 contre-collé sur chacune de ses faces et avec un voile HX2632 traité avec 50 ou 100kGy de rayonnement Beta également contre-collé sur chacune de ses faces. Les trois voiles possèdent un grammage de 4 g/m$^2$. Il apparait ainsi nettement que malgré le traitement d'irradiation subi par le voile HX2632, cela n'affecte en rien son caractère collant et il est ainsi possible d'obtenir des qualités de dépose équivalentes à celles obtenues avec un voile thermoplastique pur.

**Tableau 5** donnant la force de pelage générée sur 200 mm entre deux bandes de matériau intermédiaire UD voilé selon le voile utilisé

|  | 1R8D04 | HX2632 50kGy Beta | HX2632 100kGy Beta |
|---|---|---|---|
| Moyenne Force de pelage sur 200mm (N) | 0,13 +/-0,03 | 0,12 +/- 0,02 | 0,14 +/- 0,04 |

2.2) Préformage

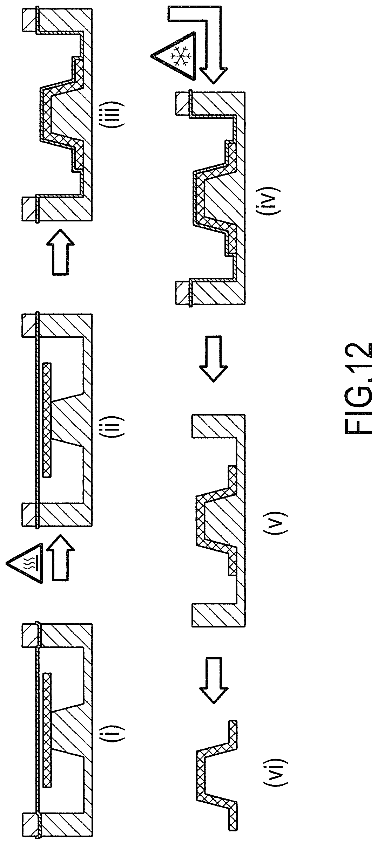

La préforme plane multiaxiale obtenue au paragraphe 2.1 peut par la suite faire l'objet d'un préformage en utilisant de nouveau le caractère thermocollant de la matière thermoplastique présente sur le matériau de renfort unidirectionnel. Pour ce faire, la préforme plane est positionnée sur l'outil de préformage à température ambiante et une bâche à vide en silicone recouvre l'ensemble qui est ensuite chauffé en étuve à une température permettant d'activer le caractère thermocollant de la matière thermoplastique ou thermodurcissable. Une pression réduite est alors appliquée pour permettre à la préforme plane d'être préformée selon la forme tridimensionnelle souhaitée, puis l'ensemble est refroidi toujours sous pression réduite, avant de récupérer la préforme. L'ensemble du procédé est décrit sur la **Figure 12**. En **(i)**, est représentée une préforme bi-dimensionnelle positionnée sur l'outillage, avec application de la bâche à vide, un chauffage conduit en **(ii)** à l'activation du caractère thermocollant, en **(iii)**, il y a application du vide, étape de préformage, suivi d'un refroidissement avec vide actif en **(iv)** conduisant, à l'issue de **(v)** et **(vi)** à la préforme prête.

Alors que les matériaux de renfort utilisant des voiles tels que ceux décrits dans la demande de brevet WO 2010/046609 doivent être préformés à des températures supérieures à 150°C, les matériaux de l'invention réalisés avec le voile HX2632 peuvent être préformés à des températures inférieures à 130°C, préférentiellement inférieures à 120°C. Ceci montre une nouvelle fois un réel intérêt industriel pour la réalisation du procédé intégral à des températures inférieures à 130°C.

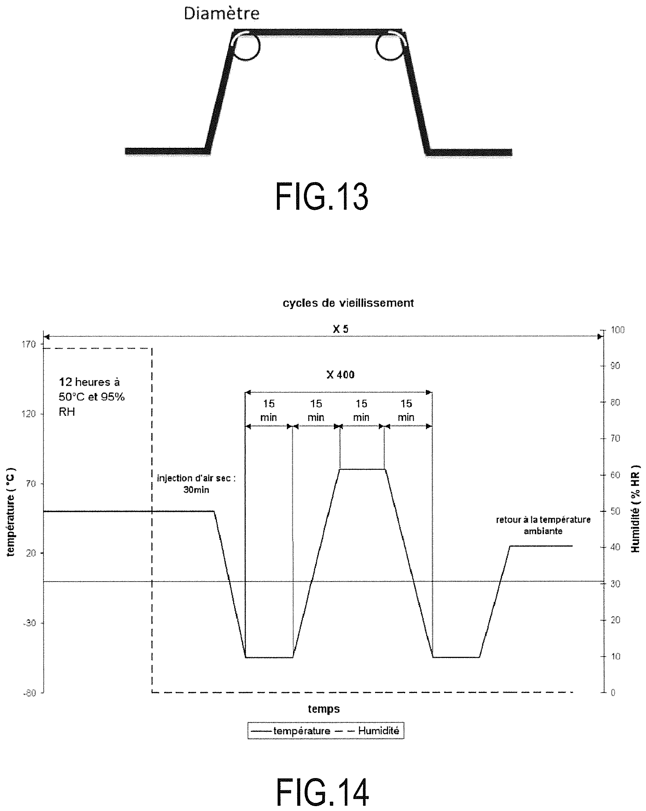

Afin d'apprécier la qualité de la préforme obtenue, une mesure de diamètre est effectuée sur celle-ci. De la même façon que pour évaluer la qualité de la dépose, trois matériaux UD voilés sont comparés : contre-collage avec des voiles 1R8D04, des voiles HX2632 soumis à un rayonnement Beta de 50 kGy et des voiles HX2632 soumis à un rayonnement Beta de 100 kGy. Les préformes telles que celle présentée en **Figure 12** ont été préalablement obtenues par empilement de 10 plis unidirectionnels [(45/0/90/135/0)]$_2$ de masse surfacique 210 g/m$^2$. Les cycles de préformage, ainsi que les mesures de rayon effectuées sur les préformes obtenues, sont présentés dans le **Tableau 6**. La **Figure 13** décrit l'emplacement de la mesure du diamètre sur la préforme.

**Tableau 6**

|  | 1R8D04 | HX2632 50kGy Beta | HX2632 100kGy Beta |
|---|---|---|---|
| Etape de préformage | 30min 170°C | 30min 120°C | 30min 120°C |
| Diamètre mesuré (mm) | 20,0 | 21,3 | 22,0 |
| Diamètre théorique (mm) | 20 | | |

Les résultats soulignent clairement l'intérêt de l'invention, puisqu'elle permet à la fois de réduire les températures de préformage de manière significative, sans pour autant altérer la qualité de la préforme obtenue. Dans l'exemple présenté, un diamètre de 22mm pour 20mm théorique est considéré comme parfaitement acceptable.

3) Traitement des panneaux

Une préforme de 340 mm x 340 mm constituée de la séquence d'empilement adapté au grammage de carbone est placée dans un moule d'injection sous presse. Un cadre d'épaisseur connu entourant la préforme permet d'obtenir le taux volumique de fibres TVF souhaité.

Quatre matériaux de renfort sont comparés, deux selon l'invention décrits précédemment et deux autres utilisés dans l'art antérieur (**Tableau 7**).

**Tableau 7**

|  | Matériau 1 comparatif | Matériau 2 comparatif | Matériau 3 selon l'invention | Matériau 4 selon l'invention |
|---|---|---|---|---|
| Fibre de renfort | Hexcel IMA 12K | | | |
| Couche poreuse | Poudre Epoxy utilisée dans le tissu Hexcel Primetex 43098 S 1020 S E01 1F | Voile 1R8D04 | Voile HX2632 50kGy Beta irradié après contre-collage (nappe irradiée) | Voile HX2632 100kGy Beta irradié après contre-collage (nappe irradiée) |
| Masse surfacique des fibres de renfort de l'UD voilé (g/m$^2$) | 210 | | | |

La résine époxy commercialisée par Hexcel Composites sous la référence HexFlow RTM6 est injectée à 80°C sous 2 bars à travers la préforme qui est maintenue à 140°C au sein de la presse. La pression appliquée par la presse est de 5,5 bars. Lorsque la préforme est remplie et que la résine sort du moule, le tuyau de sortie est fermé et le cycle de polymérisation commence (3°C/min jusqu'à 180°C suivi d'une post-cuisson de 2h à 180°C et d'un refroidissement à 5°C/min).

Des éprouvettes sont ensuite découpées aux dimensions adaptées pour réaliser des tests de compression après impact (CAI), de cisaillement dans le plan (IPS), de compression sur plaque trouée (OHC) ainsi que d'amorçage et de propagation de fissures (GIc et GIIc) résumés dans la **Tableau 8.**

**Tableau 8**

| | IPS | CAI | GIc/GIIc | OHC |
|---|---|---|---|---|
| Orientation des plis de la préforme | [45/135]2s | [45/0/135/90]3s | [0]16 | [45/0/135/90]3s |
| Machine de test | Instron 5582 | Zwick Z300 | Instron 2519 | Zwick Z300 |
| Norme EN | 6031 | 6038 | 6033/6034 | 6036 |

Les résultats obtenus pour l'ensemble de ces tests sont répertoriés dans les **Tableaux 9** à **11.** Dans le cas des tests GIc et GIIc, l'obtention d'une valeur supérieure à 700 J/m$^2$ est considérée comme très satisfaisante et est obtenue quel que soit le matériau.

**Tableau 9 - IPS**

| IPS (sec, 23°C) | Matériau 1 comparatif | Matériau 2 comparatif | Matériau 3 selon l'invention | Matériau 4 selon l'invention |
|---|---|---|---|---|
| Contrainte (MPa) | 66 | 102 | 101 | 100 |
| Module (MPa) | 4,4 | 4,4 | 4,5 | 4,6 |
| IPS (sec, 70°C) | Matériau 2 comparatif | Matériau 4 selon l'invention | | |
| Contrainte (MPa) | 71 | 71 | | |
| Module (MPa) | 3,1 | 3,8 | | |
| | | | | |
| IPS (sec, 120°C) | Matériau 2 comparatif | Matériau 4 selon l'invention | | |
| Contrainte (MPa) | 54 | 52 | | |
| Module (MPa) | 2,8 | 3,5 | | |

**Tableau 10 - CAI**

| CAI normalisée à 60%TFV (sec, 23°C) | Matériau 1 comparatif | Matériau 2 comparatif | Matériau 3 selon l'invention | Matériau 4 selon l'invention |
|---|---|---|---|---|
| 30J (MPa) | 126 | 259 | 262 | 255 |
| 70J (MPa) | | 192 | 217 | 211 |

**Tableau 11 - OHC**

| Compression | Matériau 1 comparatif | Matériau 2 comparatif | Matériau 3 selon l'invention | Matériau 4 selon l'invention |
|---|---|---|---|---|
| OHC (MPa) | 257 | 285 | **295** | **295** |

Les résultats mécaniques présentés montrent qu'additionnellement aux problématiques de procédé détaillées précédemment auxquelles les matériaux de l'invention répondent, ceux-ci permettent également d'obtenir des pièces composites aux propriétés optimales, notamment en termes de résistance à l'impact (CAI), les propriétés mécaniques montrant la sensibilité aux trous telles que la compression trouée (OHC), le cisaillement dans le plan (IPS) ou encore la résistance à la fissure (amorçage et propagation GIc, GIIc).

Il est en particulier possible d'obtenir une contrainte à la rupture en compression après impact supérieure à 250MPa sous un impact de 30J.

On constate ainsi que d'une part, bien que la poudre époxy permette de solutionner la problématique de réaliser l'ensemble des étapes du procédé de réalisation de la préforme sèche à des températures comprises entre 80 et 130°C, elle ne permet pas pour autant d'obtenir des pièces composites aux propriétés mécaniques optimales. D'autre part, le voile polyamide classique permet à l'inverse d'obtenir des propriétés mécaniques optimales mais ne solutionne pas la problématique du procédé à basse température.

La présente invention permet donc de combiner à la fois un procédé de réalisation de la préforme sèche à des températures inférieures à 130°C et des propriétés mécaniques optimales sur pièces composites.

4) Microfissurations

Le comportement aux microfissurations est étudié sur un matériau composite dont la préforme sèche est obtenue par empilement de 16 plis unidirectionnels [45°/0°/135°/90°]2s de masse surfacique 210 g/m$^2$. La résine époxy commercialisée par Hexcel sous la référence HexFlow RTM6 est injectée à 80°C sous 2 bars à travers la préforme qui est maintenue à 140°C au sein de la presse. La pression appliquée par la presse est de 5,5 bars. Lorsque la préforme est remplie et que la résine sort du moule, le tuyau de sortie est fermé et le cycle de polymérisation commence (3°C/min jusqu'à 180°C suivi d'une post-cuisson de 2h à 180°C et d'un refroidissement à 5°C/min).

Trois matériaux de renfort sont comparés, deux selon l'invention : matériaux 3 et 4 selon l'invention décrits précédemment et un utilisé dans l'art antérieur : matériau comparatif 5, qui est un matériau de renfort semblable au matériau comparatif 2 décrit précédemment, mais où la couche poreuse 1R8D04 est remplacée par la couche poreuse PA11 LMNO sur chacune des faces du renfort fibreux.

Les matériaux composites obtenus sont alors soumis à un ou plusieurs cycles hygrothermiques, afin de simuler les cycles thermiques et les périodes d'humidité qu'une pièce aéronautique peut être amenée à subir.

Des échantillons de 50mm x 60mm x 4mm sont découpés pour subir le cycle hygrothermique défini ci-après. Ensuite, chaque échantillon est de nouveau découpé, puis poli, afin de compter le nombre de fissures apparaissant durant le cycle.

Cycle Hygrothermique présenté **Figure 14:**

Le cycle inclut plusieurs répétitions de deux phases :

Une phase stationnaire de prise en humidité à 50°C et sous 95% d'humidité, suivie d'une heure de cycles thermiques. Ces cycles thermiques consistent en un plateau de 15 minutes à -55°C, suivi d'une augmentation de température durant 15 minutes pour atteindre 72°C, suivie d'un plateau de 15 minutes à 72°C. Ce plateau est suivi d'une nouvelle phase de changement de température pour retourner à -55°C. Cette température négative est choisie car elle correspond à ce que peut subir un avion lors d'un vol subsonique. La température positive permet d'accélérer la désorption d'humidité.

La sollicitation, grâce à sa période d'humidification, provoque un gradient de concentration en eau au sein de l'échantillon. Ce profil de concentration est différent sur les chants de l'échantillon car les coefficients de diffusion sont plus grands dans le sens des fibres. L'orientation des fibres étant différente dans chaque pli unidirectionnel, les coefficients de diffusion le sont également, ce qui génère un profil de concentration en eau très complexe sur les bords de l'échantillon. Il a été tenu compte de ce phénomène dans le dimensionnement de l'échantillon et dans la définition de la zone à étudier.

Les cycles hygrothermiques sont réalisés au sein d'une enceinte « CTS (Climatic Testing System) », modèle CS-70/280-15 de la société Climatique et Thermique Service (ZAC du Pujol, 13390 Auriol, France), incluant un système de refroidissement par détente de liquide frigorigène de deux étages. Un groupe réfrigérant modèle Type 30 RA-040-B 0327-PEE de la société Carrier (CARRIER S.A.S. Route du Thil 01122 Montluel Cedex) permet de faire circuler un volume conséquent d'eau glycolée recyclée à 10°C dans le système de refroidissement du premier étage de l'enceinte climatique pour garantir son fonctionnement. Un tel dispositif permet de garantir une vitesse de refroidissement de 10°C/min et ce, même pour des températures inférieures à -50°C, ce qui est proche de la limite froide d'utilisation de l'enceinte, fixée entre 180°C et -70°C.

L'humidité dans le volume utile de l'enceinte est contrôlée et ajustée à l'aide d'un bain de rosée. A ce dispositif, a été ajouté un assécheur modèle ZANDER Type K-MTI de la Société ZANDER (45219 ESSEN, Allemagne) par injection d'air sec. Une fois la consigne en humidité de l'assécheur fixée à 0 %, le volume est considéré comme entièrement sec.

Afin de compter les fissures par observation microscopique après le cycle hygrothermique, il a été établi un protocole de préparation des échantillons. La seule méthode directe d'observation de microstructures internes, telles que des microfissures à un matériau est la découpe puis le polissage du plan de découpe. Cette méthode est très répandue. Elle consiste à utiliser des toiles et des suspensions diamantées pour abraser la surface à polir de façon de plus en plus fine, afin d'obtenir la planéité nécessaire à une bonne analyse.

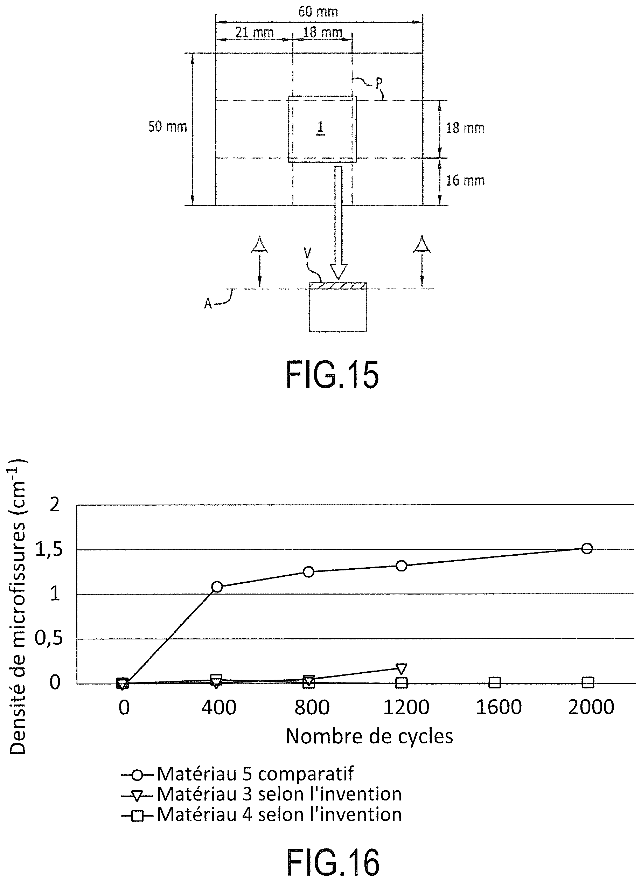

Il a été choisi d'utiliser des échantillons de 5x6 cm². Il existe donc deux plans d'observation équivalents. Dans chaque échantillon ayant subi le cycle hygrothermique, des découpes, conformément à la **Figure 15** sont réalisées. L'échantillon central 1 est observé sur les plans d'observations présentés **Figure 15,** après polissage. Les plans de découpe P sont perpendiculaires au plan des plis unidirectionnels. La méthode de polissage de l'échantillon jusqu'à l'état miroir, propice à l'observation, a été simplifiée par rapport à un métal, dans l'étape utilisant un papier à gros grains en raison de sa plus grande ductilité. Mais une finition plus soignée, entrecoupée de nettoyage en bain à ultrasons, est nécessaire lors de la phase finale de polissage par suspension diamantée.

La découpe des échantillons pour conduire à l'échantillon final 100 est réalisée avec une tronçonneuse à lame circulaire en carbure de silicium. Cette découpe est réalisée par abrasion progressive, avec calibration de la vitesse d'avance de la lame. Ensuite, le protocole de polissage suivant, qui permet d'obtenir un poli miroir propice à l'observation au microscope, est mis en œuvre, au niveau du plan de découpe.

Protocole de polissage

Les échantillons sont enrobés dans de la résine 605 de LamPlan (résine acrylique polymérisée avec du méthacrylate de méthyle) et polis grâce à une polisseuse automatique à pression indépendante (Mécapol P320 de Presi).

Pour cela, les échantillons découpés sont placés au fond d'un moule cylindrique. La surface à polir est orientée vers le fond du moule. Le moule est ensuite rempli d'une résine bi-composant d'enrobage à froid (LamPlan, 605) qui polymérise spontanément en environ 15min. Les échantillons sont ensuite démoulés et polis selon le protocole décrit.

Les différentes étapes du polissage sont données dans le **Tableau 12** ci-dessous :

**Tableau 12**

| N° de l'étape | qrain papier | pression par échantillon | temps minimum |
|---|---|---|---|
| 1 | P240 | 250 g/cm² | 40s |
| 2 | P600 | 250 g/cm² | facultatif |
| 3 | P1000 | 250 g/cm² | 50s |
| 3 min dans un bain à ultrasons | | | |
| N° de l'étape | suspension diamantée | pression par échantillon | temps |
| 4 | 3μm | 100 g/cm² | 7 min |
| 3 min dans un bain à ultrasons | | | |
| 5 | 1μm | 100 g/cm² | 5 min |

Dans les étapes 1, 2 et 3, on utilise, pour la polisseuse automatique, une vitesse de rotation de 150 tours par minute en contre-rotatif pour le plateau et la vitesse maximale pour la tête (100 tours par minute). Les impuretés sont évacuées à grande eau.

Dans les étapes 4 et 5, on utilise une vitesse de rotation de 300 tours par minute en contre-rotatif pour le plateau et la vitesse maximale pour la tête (100 tours par minute). Les impuretés sont alors évacuées grâce à du lubrifiant introduit au goutte à goutte.

Le comptage des fissures est alors effectué par analyse d'images micrographiques obtenues par une caméra numérique 5 Megapixels (modèle U-TVO.5XC-2 - 4F04335 de la société OLYMPUS) montée sur un microscope (modèle GX 51 F - T2 SN 4 G 0 9299 de la société OLYMPUS), avec un objectif x 5 (grossissement x 50). Le logiciel d'analyse d'image utilisé est « Analysis Pro Five », commercialisé par la société Olympus France SAS, Parc d'affaire Silic, 74 rue d'Arcueil BP 90165, 94533 Rungis cedex, France. Pour une observation de Ni fissures dans le pli unidirectionnel i sur un échantillon de longueur L avec un drapage laissant apparentes les fissures dans p plis unidirectionnels, un critère d est défini selon l'équation :

$$d = \frac{\sum_i Ni}{L \times p}$$

Le facteur p correspond au nombre de plis unidirectionnels total du stratifié moins le nombre de plis unidirectionnels dont les fibres de carbone sont parallèles au plan d'observation, compte tenu du fait que les fissures demeurent invisibles dans ces plis unidirectionnels.

Le facteur d est une densité linéique de fissures, exprimée en cm$^{-1}$, qui, compte tenu du choix de L, peut être considéré comme une caractéristique intrinsèque au matériau sous la sollicitation considérée.

Le graphique de la **Figure 16** montre les valeurs des facteurs d (nommé densité de microfissures) obtenus sur des échantillons différents (étant donné que la méthode de mesure est destructrice), après un nombre de cycles hygrothermiques déterminé. Il est clairement mis en évidence que les stratifiés conformes à l'invention présentent une densité de microfissures beaucoup moins importante voire nulle.

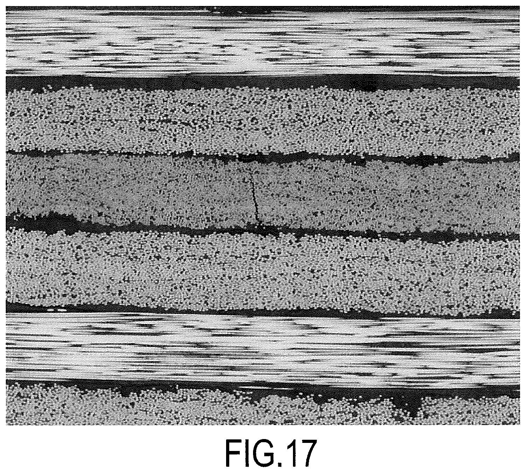

Une image d'une microfissure obtenue après 400 cycles hygrothermiques avec le stratifié de l'exemple comparatif 3 est présentée **Figure 17.**

Un tel résultat met en évidence un autre apport de l'invention : l'ajout d'une couche poreuse polymérique thermoplastique partiellement réticulée permet réellement de minimiser, voire de supprimer l'apparition des microfissures.

**B. ESSAIS REALISES AVEC UTILISATION D'UN DEPOT DE POUDRE**

Dans un premier temps, le liant Hylink a été réticulé pendant 30 minutes à 180 ° C dans un four. La mesure de la masse de la part réticulée, ainsi que la microscopie optique à chaud ont été réalisées, comme dans la partie A-I et II, afin de vérifier le comportement du polymère. Les teneurs en part réticulée ont été mesurées par immersion dans de l'acide formique pendant 3 jours à température ambiante, puis filtration et séchage à 50 ° C pendant 4h. Les résultats obtenus sont les suivants :

- part réticulée initiale : 7 % +/- 3%, par rapport à la masse totale de polymère
- part réticulée après 30 minutes à 180 ° C : 60 % +/- 9%, par rapport à la masse totale de polymère.

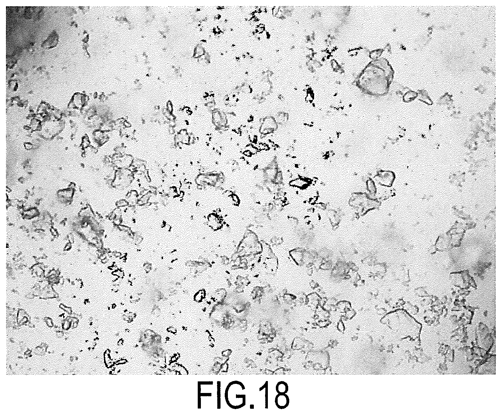

La **Figure 18** présente l'image obtenue au microscope optique à 180°C donc post-réticulation de la résine RTM6 présente. La photographie présentée met en évidence la capacité du polymère à réticuler partiellement sous l'augmentation de la température, lui permettant de rester insoluble dans la résine RTM6, de la même manière que dans le cas du voile HX2632 soumis à irradiation.

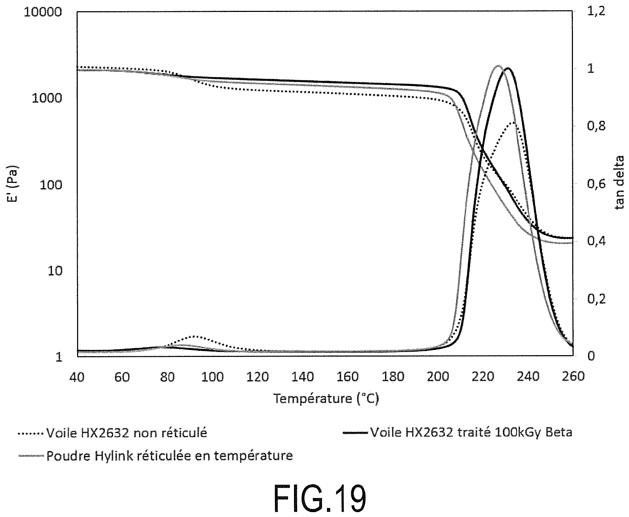

Là encore, ces résultats peuvent être corrélés aux courbes DMA sur les échantillons RTM6 / liant Hylink (suivant EN 6032). Les échantillons ont été pré-polymérisés à 120° C pendant 45 minutes, suivis d'une post-cuisson de 2 heures à 180° C. Comme le montre les résultats présentés sur la **Figure 19**, le traitement de réticulation à la température appliqué sur le liant Hylink a une grande influence sur les résultats DMA : en augmentant le taux de réticulation, il est possible de maintenir la performance thermomécanique du matériau de la même façon que pour le voile HX2632. En conséquence, la contribution thermoplastique est négligeable, ce qui confirme les observations de microscopie.

**Revendications**

1. Matériau de renfort comprenant au moins un renfort fibreux associé sur au moins une de ses faces à une couche poreuse polymérique, la ou les couches poreuses polymériques présentes représentant au plus 10% de la masse totale du matériau de renfort, de préférence de 0,5 à 10% de la masse totale du matériau de renfort, et préférentiellement de 2 à 6% de la masse totale du matériau de renfort,
**caractérisé en ce que** la ou les couche(s) poreuse(s) polymérique(s) présente(s) contient(nent) un polymère thermoplastique partiellement réticulé.

2. Matériau de renfort selon la revendication 1, **caractérisé en ce que** le polymère thermoplastique partiellement réticulé composant la couche poreuse comprend une part thermoplastique et une part réticulée et la part thermoplastique représente de 30 à 90% en masse, de préférence de 30 à 70 % en masse de la masse du polymère.

3. Matériau de renfort selon la revendication 1 ou 2, **caractérisé en ce que** le polymère thermoplastique partiellement réticulé composant la couche poreuse comprend une part thermoplastique et une part réticulée et la part thermoplastique présente une température de fusion inférieure à 150°C, voire inférieure à 140°C et préférentiellement appartenant à la gamme allant de 80 à 130 °C, et de préférence à la gamme allant de 80 à 120°C.

4. Matériau de renfort selon l'une quelconque des revendications 1 à 3, **caractérisé en ce que** le polymère thermoplastique partiellement réticulé composant la couche poreuse est un polymère semi-cristallin.

5. Matériau de renfort selon l'une quelconque des revendications 1 à 4, **caractérisé en ce que** le polymère thermoplastique partiellement réticulé est obtenu par réticulation de fonctions réticulables sous l'action de la chaleur ou d'un rayonnement, ladite réticulation ne nécessitant pas de catalyseur chimique.

6. Matériau de renfort selon la revendication 5, **caractérisé en ce que** les fonctions réticulables sont choisies parmi les fonctions insaturées.

7. Matériau de renfort selon l'une quelconque des revendications 1 à 6, **caractérisé en ce que** le polymère thermoplastique partiellement réticulé appartient à la famille des copolyamides.

8. Matériau de renfort selon l'une quelconque des revendications 1 à 7, **caractérisé en ce que** le polymère thermoplastique partiellement réticulé est obtenu par réticulation d'un copolyamide branché à extrémités insaturées constitué de :

    - au moins un motif provenant d'un monomère multifonctionnel (A) choisi parmi la diéthylène triamine, le pentaérythritol, l'acide mellitique et le 2,2-diméthylolpropionique acide,
    - au moins des enchainements résultant de la condensation en présence d'au moins un monoacide insaturé utilisé comme limiteur de chaine, et
    - soit d'au moins deux acides alpha,omega-aminocarboxyliques n'ayant pas le même nombre d'atomes de carbone,
    - soit d'au moins deux lactames n'ayant pas le même nombre d'atomes de carbone,
    - soit d'au moins un lactame, au moins un diacide carboxylique et au moins une diamine,
    - soit d'un lactame et/ou d'un acide alpha,omega-aminocarboxylique n'ayant pas le même ordre d'atomes de carbone,
    - soit d'une diamine et d'un diacide carboxylique,
    - soit d'au moins une diamine, d'au moins un diacide carboxylique et d'au moins un acide alpha,omega-aminocarboxylique,

la proportion de (A) étant inférieure à 9% en masse de l'ensemble de (A) et des autres monomères précédemment cités.

9. Matériau de renfort selon la revendication 8, **caractérisé en ce que** les enchainements du copolyamide branché à extrémités insaturées comprennent au moins du caprolactame et du lauryllactame.

10. Matériau de renfort selon la revendication 8, **caractérisé en ce que** les enchainements du copolyamide branché à extrémités insaturées comprennent au moins du caprolactame, de l'hexaméthylène diamine et de l'acide adipique.

11. Matériau de renfort selon l'une quelconque des revendications 8 à 10, **caractérisé en ce que** le monoacide insaturé du copolyamide branché à extrémités insaturées est l'acide crotonique ou l'acide undécylénique.

12. Matériau de renfort selon l'une quelconque des revendications 1 à 5, **caractérisé en ce que** le polymère thermoplastique partiellement réticulé est obtenu par réticulation d'un copolyamide comprenant des fonctions isocyanates et époxy.

13. Matériau de renfort selon l'une quelconque des revendications 1 à 12, **caractérisé en ce que** le renfort fibreux est une nappe unidirectionnelle de fibres de renfort, un tissu de fibres de renfort ou un empilement de nappes unidirectionnelles liées entre elles par couture ou par tout autre moyen physique et/ou le renfort fibreux est constitué de fibres de carbone.

14. Matériau de renfort selon l'une quelconque des revendications 1 à 13, **caractérisé en ce qu'**il est constitué d'une nappe unidirectionnelle de fibres de renfort correspondant au renfort fibreux, associée sur au moins une de ses faces à une couche poreuse présentant un caractère collant à chaud, de préférence, associée sur chacune de ses faces à une couche poreuse présentant un caractère collant à chaud et les couches poreuses présentes sur chacune des faces de la nappe unidirectionnelle de fibres de renfort sont identiques, l'association du renfort fibreux et de ladite (des dites) couche poreuse a été réalisée grâce au caractère collant à chaud de la couche poreuse.

15. Matériau de renfort selon l'une quelconque des revendications 1 à 13, **caractérisé en ce qu'**il est constitué d'un empilement de nappes de fibres de renfort unidirectionnelles orientées selon des directions différentes, avec au moins une couche poreuse polymérique contenant un polymère thermoplastique partiellement réticulé intercalée entre deux nappes unidirectionnelles de fibres de renfort et/ou en surface de l'empilement, de préférence l'empilement correspond :

- à un enchainement $(CM/R)^n$, avec CM qui désigne une couche poreuse polymérique comprenant ou constituée d'un polymère thermoplastique partiellement réticulé et R un renfort fibreux et n désignant un nombre entier, avec de préférence toutes les couches CM qui présentent un grammage identique, ou
- à un enchainement $(CM/R)^n/CM$, avec CM qui désigne une couche poreuse polymérique comprenant ou constituée d'un polymère thermoplastique partiellement réticulé et R un renfort fibreux et n désignant un nombre entier, avec de préférence les couches poreuses externes polymériques comprenant ou constituées d'un polymère thermoplastique partiellement réticulé ayant un grammage égal au demi-grammage de chacune des couches poreuses internes polymériques comprenant ou constituées d'un polymère thermoplastique partiellement réticulé.

16. Matériau de renfort selon la revendication 15, **caractérisé en ce que** les renforts fibreux R sont des nappes unidirectionnelles de fibres de renfort, de préférence de grammage identique.

17. Matériau de renfort selon la revendication 15 ou 16, **caractérisé en ce que** l'association de nappes unidirectionnelles de fibres de renfort entre elles et avec l'au moins une couche poreuse est réalisée par couture, tricotage ou aiguilletage.

18. Matériau de renfort selon l'une quelconque des revendications 1 à 17, **caractérisé en ce que** la ou les couches poreuses présente(s) est(sont) un film poreux, une grille, un dépôt de poudre, un tissu ou, de préférence, un non-tissé ou voile.

19. Matériau précurseur d'un matériau de renfort selon l'une quelconque des revendications 1 à 18, **caractérisé en ce qu'**il comprend un renfort fibreux associé sur au moins une de ses faces à une couche poreuse polymérique comprenant ou constituée d'un polymère thermoplastique porteur de fonctions réticulables.

20. Procédé de préparation d'un matériau de renfort selon l'une quelconque des revendications 1 à 18, **caractérisé en ce qu'**il comprend les étapes successives suivantes :

a1) disposer d'un renfort fibreux,
a2) disposer d'au moins une couche poreuse polymérique comprenant ou constituée d'un polymère thermoplastique partiellement réticulé,
a3) procéder à l'association du renfort fibreux et de l'au moins une couche poreuse polymérique comprenant ou constituée d'un polymère thermoplastique partiellement réticulé.

21. Procédé de préparation selon la revendication 20, **caractérisé en ce que** l'association de l'étape a3) est obtenue par application de l'au moins une couche poreuse sur le renfort fibreux, ladite application étant accompagnée ou suivie d'un chauffage du polymère thermoplastique partiellement réticulé entrainant son ramollissement ou sa fusion, puis suivie d'un refroidissement.

22. Procédé de préparation d'un matériau de renfort selon l'une quelconque des revendications 1 à 18, **caractérisé en ce qu'**il comprend les étapes successives suivantes :

b1) disposer d'un matériau précurseur selon la revendication 19, comprenant un renfort fibreux associé sur au moins une de ses faces à une couche poreuse polymérique comprenant ou constituée d'un polymère thermoplastique porteur de fonctions réticulables,
b2) procéder à la réticulation d'au moins une partie des fonctions réticulables présentes sur le polymère thermoplastique.

23. Procédé de préparation selon la revendication 22, **caractérisé en ce que** la réticulation de l'étape b2) est réalisée sous l'action de la chaleur, ou de préférence sous l'action d'un rayonnement UV, gamma ou beta.

24. Procédé de préparation selon la revendication 22 ou 23, **caractérisé en ce qu'**il comprend les étapes successives suivantes, en amont de l'étape b1) :

c1) disposer d'un renfort fibreux,
c2) disposer d'au moins une couche poreuse polymérique comprenant ou constituée d'un polymère thermoplastique porteur de fonctions réticulables,
c3) procéder à l'association du renfort fibreux et de l'au moins une couche poreuse polymérique comprenant ou constituée d'un polymère thermoplastique porteur de fonctions réticulables.

25. Procédé de préparation selon la revendication 24, **caractérisé en ce que** l'association de l'étape c3) est obtenue par application de l'au moins une couche poreuse sur le renfort fibreux, ladite application étant accompagnée ou suivie d'un chauffage du polymère thermoplastique porteur de fonctions réticulables entrainant son ramollissement ou sa fusion, mais n'entrainant pas la réticulation des fonctions réticulables, puis suivie d'un refroidissement.

26. Utilisation d'un matériau de renfort selon l'une quelconque des revendications 1 à 18, pour la réalisation d'une préforme ou d'une pièce composite, en association avec une résine thermodurcissable, thermoplastique ou un mélange de résines thermodurcissable et thermoplastique, de préférence avec une résine thermodurcissable époxy injectée ou infusée.

**Patentansprüche**

1. Verstärkungsmaterial, umfassend mindestens eine faserige Verstärkung, die auf mindestens einer ihrer Flächen mit einer porösen polymeren Schicht verbunden ist, wobei die vorhandene(n) poröse(n) polymere(n) Schicht(en) höchstens 10 % der Gesamtmasse des Verstärkungsmaterials, bevorzugt 0,5 bis 10 % der Gesamtmasse des Verstärkungsmaterials und vorzugsweise 2 bis 6 % der Gesamtmasse des Verstärkungsmaterials ausmachen, **dadurch gekennzeichnet, dass** die vorhandene(n) poröse(n) polymere(n) Schicht(en) ein teilweise vernetztes thermoplastisches Polymer enthält (enthalten).

2. Verstärkungsmaterial nach Anspruch 1, **dadurch gekennzeichnet, dass** das teilweise vernetzte thermoplastische Polymer, aus dem die poröse Schicht besteht, einen thermoplastischen Teil und einen vernetzten Teil umfasst und der thermoplastische Teil 30 bis 90 % Massenanteil, vorzugsweise 30 bis 70 % Massenanteil, des Polymers ausmacht.

3. Verstärkungsmaterial nach Anspruch 1 oder 2, **dadurch gekennzeichnet, dass** das teilweise vernetzte thermoplastische Polymer, aus dem die poröse Schicht besteht, einen thermoplastischen Teil und einen vernetzten Teil umfasst und der thermoplastische Teil eine Schmelztemperatur von weniger als 150 °C oder sogar weniger als 140 °C und vorzugsweise im Bereich von 80 bis 130 °C und bevorzugt im Bereich von 80 bis 120 °C aufweist.

4. Verstärkungsmaterial nach einem der Ansprüche 1 bis 3, **dadurch gekennzeichnet, dass** es sich bei dem teilweise vernetzten thermoplastischen Polymer, aus dem die poröse Schicht besteht, um ein teilkristallines Polymer handelt.

5. Verstärkungsmaterial nach einem der Ansprüche 1 bis 4, **dadurch gekennzeichnet, dass** das teilweise vernetzte thermoplastische Polymer durch Vernetzung von vernetzbaren Funktionen unter Einwirkung von Wärme oder Strahlung erhalten wird, wobei die Vernetzung keinen chemischen Katalysator erfordert.

6. Verstärkungsmaterial nach Anspruch 5, **dadurch gekennzeichnet, dass** die vernetzbaren Funktionen aus ungesättigten Funktionen ausgewählt sind.

7. Verstärkungsmaterial nach einem der Ansprüche 1 bis 6, **dadurch gekennzeichnet, dass** das teilweise vernetzte thermoplastische Polymer zu der Familie der Copolyamide gehört.

8. Verstärkungsmaterial nach einem der Ansprüche 1 bis 7, **dadurch gekennzeichnet, dass** das teilweise vernetzte thermoplastische Polymer durch Vernetzung eines verzweigten Copolyamids mit ungesättigten Enden erhalten wird, bestehend aus:

- mindestens einer Einheit, die von einem multifunktionellen Monomer (A) stammt, ausgewählt aus Diethylentriamin, Pentaerythrit, Mellitsäure und 2,2-Dimethylolpropionsäure,
- mindestens Sequenzen, die sich aus der Kondensation in Gegenwart mindestens einer ungesättigten Monosäure ergeben, die als Kettenbegrenzer verwendet wird, und
- entweder mindestens zwei alpha, omega-Aminocarbonsäuren, die nicht die gleiche Anzahl von Kohlenstoffatomen aufweisen,
- oder mindestens zwei Laktamen, die nicht die gleiche Anzahl von Kohlenstoffatomen aufweisen,
- oder mindestens einem Lactam, mindestens einer Diacarbonsäure und mindestens einem Diamin,
- oder einem Lactam und/oder einer alpha, omega-Aminocarbonsäure mit nicht der gleichen Reihenfolge der Kohlenstoffatome,
- oder einem Diamin und einer Dicarbonsäure,
- oder mindestens einem Diamin, mindestens einer Diacarbonsäure und mindestens einer alpha, omega-Aminocarbonsäure,

wobei der Anteil von (A) weniger als 9 % Massenanteil der Summe von (A) und den anderen oben genannten Monomeren beträgt.

9. Verstärkungsmaterial nach Anspruch 8, **dadurch gekennzeichnet, dass** die Sequenzen des verzweigten Copolyamids mit ungesättigten Enden mindestens Caprolactam und Lauryllactam umfassen.

10. Verstärkungsmaterial nach Anspruch 8, **dadurch gekennzeichnet, dass** die Sequenzen des verzweigten Copolyamids mit ungesättigten Enden mindestens Caprolactam, Hexamethylendiamin und Adipinsäure umfassen.

11. Verstärkungsmaterial nach einem der Ansprüche 8 bis 10, **dadurch gekennzeichnet, dass** es sich bei der ungesättigten Monosäure des verzweigten Copolyamids mit ungesättigten Enden um Crotonsäure oder Undecylensäure handelt.

12. Verstärkungsmaterial nach einem der Ansprüche 1 bis 5, **dadurch gekennzeichnet, dass** das teilweise vernetzte thermoplastische Polymer durch Vernetzung eines Copolyamids mit Isocyanat- und Epoxidfunktionen erhalten wird.

13. Verstärkungsmaterial nach einem der Ansprüche 1 bis 12, **dadurch gekennzeichnet, dass** es sich bei der faserigen Verstärkung um eine unidirektionale Bahn aus Verstärkungsfasern, ein Gewebe aus Verstärkungsfasern oder einen Stapel unidirektionaler Bahnen handelt, die durch Vernähen oder durch ein anderes physikalisches Mittel miteinander verbunden sind, und/oder dass die faserige Verstärkung aus Kohlenstofffasern besteht.

14. Verstärkungsmaterial nach einem der Ansprüche 1 bis 13, **dadurch gekennzeichnet, dass** es aus einer unidirektionalen Bahn aus Verstärkungsfasern besteht, die der faserigen Verstärkung entspricht, die auf mindestens einer ihrer Flächen mit einer porösen Schicht verbunden ist, die eine Heißklebrigkeit aufweist, bevorzugt auf jeder ihrer Flächen mit einer porösen Schicht verbunden ist, die eine Heißklebrigkeit aufweist, und die porösen Schichten, die auf jeder der Flächen der unidirektionalen Bahn aus Verstärkungsfasern vorhanden sind, identisch sind, wobei die Verbindung der faserigen Verstärkung und der besagten porösen Schicht(en) durch die Heißklebrigkeit der porösen Schicht erreicht worden ist.

15. Verstärkungsmaterial nach einem der Ansprüche 1 bis 13, **dadurch gekennzeichnet, dass** es aus einem Stapel unidirektionaler Verstärkungsfaserbahnen besteht, die in unterschiedlichen Richtungen orientiert sind, wobei zwischen zwei unidirektionalen Verstärkungsfaserbahnen und/oder auf der Oberfläche des Stapels mindestens eine poröse polymere Schicht, die ein teilweise vernetztes thermoplastisches Polymer enthält, angeordnet ist, wobei bevorzugt der Stapel entspricht:

- einer Sequenz $(CM/R)^n$, wobei CM eine poröse polymere Schicht, die ein teilweise vernetztes thermoplastisches Polymer umfasst oder daraus besteht, und R eine faserige Verstärkung bezeichnet und n eine ganze Zahl bezeichnet, wobei bevorzugt alle Schichten CM das gleiche Flächengewicht aufweisen, oder
- einer Sequenz $(CM/R)^n/CM$, wobei CM eine poröse polymere Schicht, die ein teilweise vernetztes thermoplastisches Polymer umfasst oder daraus besteht, und R eine faserige Verstärkung bezeichnet und n eine ganze Zahl bezeichnet, wobei bevorzugt die porösen äußeren polymeren Schichten, die ein teilweise vernetztes thermoplastisches Polymer umfassen oder daraus bestehen, ein Flächengewicht aufweisen, das gleich der Hälfte des Flächengewichts jeder der porösen inneren polymeren Schichten ist, die ein teilweise vernetztes thermoplastisches Polymer umfassen oder daraus bestehen.

16. Verstärkungsmaterial nach Anspruch 15, **dadurch gekennzeichnet, dass** es sich bei den faserigen Verstärkungen R um unidirektionale Bahnen aus Verstärkungsfasern, vorzugsweise mit gleichem Flächengewicht, handelt.

17. Verstärkungsmaterial nach Anspruch 15 oder 16, **dadurch gekennzeichnet, dass** die Verbindung von unidirektionalen Verstärkungsfaserbahnen untereinander und mit der mindestens einen porösen Schicht durch Vernähen, Verstricken oder Vernadeln durchgeführt wird.

18. Verstärkungsmaterial nach einem der Ansprüche 1 bis 17, **dadurch gekennzeichnet, dass** es sich bei der (den) vorhandenen porösen Schicht(en) um einen porösen Film, ein Gitter, eine Pulverablagerung, ein Gewebe oder bevorzugt um einen Vliesstoff oder einen Flor handelt.

19. Vorläufermaterial eines Verstärkungsmaterials nach einem der Ansprüche 1 bis 18, **dadurch gekennzeichnet, dass** es eine faserige Verstärkung umfasst, die auf mindestens einer ihrer Flächen mit einer porösen polymeren Schicht verbunden ist, die ein thermoplastisches Polymer umfasst oder daraus besteht, das vernetzbare Funktionen trägt.

20. Verfahren zur Herstellung eines Verstärkungsmaterials nach einem der Ansprüche 1 bis 18, **dadurch gekennzeichnet, dass** es die folgenden aufeinanderfolgenden Schritte umfasst:

   a1) Bereitstellen einer faserigen Verstärkung,
   a2) Bereitstellen mindestens einer porösen polymeren Schicht, die ein teilweise vernetztes thermoplastisches Polymer umfasst oder daraus besteht,
   a3) Verbinden der faserigen Verstärkung und der mindestens einen porösen polymeren Schicht, die ein teilweise vernetztes thermoplastisches Polymer umfasst oder daraus besteht.

21. Verfahren zur Herstellung nach Anspruch 20, **dadurch gekennzeichnet, dass** das Verbinden in Schritt a3) durch Aufbringen der mindestens einen porösen Schicht auf die faserige Verstärkung erhalten wird, wobei das Aufbringen von einer Erwärmung des teilweise vernetzten thermoplastischen Polymers begleitet oder gefolgt wird, die sein Erweichen oder Schmelzen bewirkt, und dann von einer Abkühlung gefolgt wird.

22. Verfahren zur Herstellung eines Verstärkungsmaterials nach einem der Ansprüche 1 bis 18, **dadurch gekennzeichnet, dass** es die folgenden aufeinanderfolgenden Schritte umfasst:

   b1) Bereitstellen eines Vorläufermaterials nach Anspruch 19, umfassend eine faserige Verstärkung, die auf mindestens einer ihrer Flächen mit einer porösen polymeren Schicht verbunden ist, die ein thermoplastisches Polymer umfasst oder daraus besteht, das vernetzbare Funktionen trägt,
   b2) Vernetzen von mindestens einem Teil der auf dem thermoplastischen Polymer vorhandenen vernetzbaren Funktionen.

23. Verfahren zur Herstellung nach Anspruch 22, **dadurch gekennzeichnet, dass** das Vernetzen in Schritt b2) unter Einwirkung von Wärme oder bevorzugt unter Einwirkung von UV-, Gamma- oder Betastrahlung durchgeführt wird.

24. Verfahren zur Herstellung nach Anspruch 22 oder 23, **dadurch gekennzeichnet, dass** es die folgenden aufeinanderfolgenden Schritte umfasst, die vor dem Schritt b1) liegen:

   c1) Bereitstellen einer faserigen Verstärkung,
   c2) Bereitstellen mindestens einer porösen polymeren Schicht, die ein thermoplastisches Polymer umfasst oder daraus besteht, das vernetzbare Funktionen trägt,
   c3) Verbinden der faserigen Verstärkung und der mindestens einen porösen polymeren Schicht, die ein thermoplastisches Polymer umfasst oder daraus besteht, das vernetzbare Funktionen trägt.

25. Verfahren zur Herstellung nach Anspruch 24, **dadurch gekennzeichnet, dass** das Verbinden in Schritt c3) durch Aufbringen der mindestens einen porösen Schicht auf die faserige Verstärkung erhalten wird, wobei das Aufbringen von einer Erwärmung des thermoplastischen Polymers, das vernetzbare Funktionen trägt, begleitet oder gefolgt wird, die sein Erweichen oder Schmelzen bewirkt, aber nicht die Vernetzung der vernetzbaren Funktionen bewirkt, und dann von einer Abkühlung gefolgt wird.

26. Verwendung eines Verstärkungsmaterials nach einem der Ansprüche 1 bis 18 zur Herstellung eines Vorformlings oder eines Verbundteils in Verbindung mit einem wärmehärtbaren, thermoplastischen Harz oder einer Mischung aus wärmehärtbaren und thermoplastischen Harzen, bevorzugt mit einem injizierten oder infundierten wärmehärtbaren Epoxidharz.

## Claims

1. Reinforcement material including at least one fiber reinforcement associated on at least one of its faces with a polymer porous layer, with the polymer porous layer(s) present representing no more than 10% of the total weight of the reinforcement material, preferably from 0.5 to 10% of the total weight of the reinforcement material, and preferably from 2 to 6% of the total weight of the reinforcement material,
**characterized in that** the polymer porous layer(s) present contain a partially cross-linked thermoplastic polymer.

2. Reinforcement material according to Claim 1, **characterized in that** the partially cross-linked thermoplastic polymer composing the porous layer includes a thermoplastic portion and a cross-linked portion, and the thermoplastic portion represents from 30 to 90% by weight, preferably from 30 to 70% by weight, of the weight of the polymer.

3. Reinforcement material according to Claim 1 or 2, **characterized in that** the partially cross-linked thermoplastic polymer composing the porous layer includes a thermoplastic portion and a cross-linked portion, and the thermoplastic portion has a melting point below 150°C, even below 140°C, and preferably falling within the range of 80 to 130°C, preferably within the range from 80 to 120°C.

4. Reinforcement material according to any of claims 1 to 3, **characterized in that** the partially cross-linked thermoplastic polymer composing the porous layer is a semi-crystalline polymer.

5. Reinforcement material according to any of claims 1 to 4, **characterized in that** the partially cross-linked thermoplastic polymer is obtained by cross-linking cross-linkable functions under the action of heat or radiation, with said cross-linking not requiring a chemical catalyst.

6. Reinforcement material according to Claim 5, **characterized in that** the cross-linkable functions are selected from the unsaturated functions.

7. Reinforcement material according to any of claims 1 to 6, **characterized in that** the partially cross-linked thermoplastic polymer belongs to the copolyamide family.

8. Reinforcement material according to any of claims 1 to 7, **characterized in that** the partially cross-linked thermoplastic polymer is obtained by cross-linking a branched copolyamide with unsaturated ends composed of:

   - at least one unit originating from a multifunctional monomer (A) selected from diethylene triamine, pentaerythritol, mellitic acid, and 2,2-dimethylolpropionic acid,
   - with at least the chain formations resulting from condensation in the presence of at least one unsaturated monoacid used as a chain limiter, and
   - either at least two alpha,omega-aminocarboxylic acids that do not have the same number of carbon atoms,
   - or at least two lactams that do not have the same number of carbon atoms,
   - or at least one lactam, at least one carboxylic diacid, and at least one diamine,
   - or one lactam and/or one alpha,omega-aminocarboxylic acid that do not have the same order of carbon atoms,
   - or one diamine and one carboxylic acid,
   - or at least one diamine, at least one carboxylic diacid, and at least one alpha,omega-aminocarboxylic acid,

   the proportion of (A) being lower than 9% by weight of the assembly of (A) and of the other previously-cited monomers.

9. Reinforcement material according to Claim 8, **characterized in that** the chain formations of the branched copolyamide with unsaturated ends include at least caprolactam and lauryllactam.

10. Reinforcement material according to Claim 8, **characterized in that** the chain formations of the branched copolyamide with unsaturated ends include at least caprolactam, diamine hexamethylene, and adipic acid.

11. Reinforcement material according to any of claims 8 to 10, **characterized in that** the unsaturated monoacid of the branched copolyamide with unsaturated ends is crotonic acid or undecylenic acid.

12. Reinforcement material according to any of claims 1 to 5, **characterized in that** the partially cross-linked thermoplastic polymer is obtained by cross-linking a copolyamide including isocyanate and epoxy functions.

13. Reinforcement material according to any of claims 1 to 12, **characterized in that** the fiber reinforcement is a unidirectional lap of reinforcement fibers, a fabric of reinforcement fibers, or a stack of unidirectional laps connected together by stitching or any other physical means and/or the fiber reinforcement is composed of carbon fibers.

14. Reinforcement material according to any of claims 1 to 13, **characterized in that** it is composed of a unidirectional lap of reinforcement fibers corresponding to the fiber reinforcement, associated on at least one of its faces with a porous layer having a hot-melt character, preferably, associated on each of its faces with a porous layer having a hot-melt character and the porous layers present on each of the faces of the unidirectional lap of reinforcement fibers are identical, the association of the fiber reinforcement with said porous layer(s) was carried out via the hot-melt character of the porous layer.

15. Reinforcement material according to any of claims 1 to 13, **characterized in that** it is composed of a stack of laps of unidirectional reinforcement fibers oriented in different directions, with at least one polymer porous layer containing a partially cross-linked thermoplastic polymer placed between two unidirectional laps of reinforcement fibers and/or on the surface of the stack, preferably the stack corresponds to :

- a chain formation $(CM/R)^n$, with CM designating a polymer porous layer including or composed of a partially cross-linked thermoplastic polymer and R being a fiber reinforcement and n designating an integer, preferably with all of the CM layers that have an identical grammage, or
- a chain formation $(CM/R)^n/CM$, with CM designating a polymer porous layer including or composed of a partially cross-linked thermoplastic polymer and R being a fiber reinforcement and n designating an integer, preferably with all of the external polymer porous layers including or composed of a partially cross-linked thermoplastic polymer having a grammage equal to the half-grammage of each of the inner polymer porous layers including or composed of a partially cross-linked thermoplastic polymer.

16. Reinforcement material according to Claim 15, **characterized in that** the fiber reinforcements R are unidirectional laps of reinforcement fibers, preferably having an identical grammage.

17. Reinforcement material according to claim 15 or 16, **characterized in that** the association of unidirectional laps of reinforcement fibers among themselves and with at least one porous layer is carried out by stitching, knitting, or needling.

18. Reinforcement material according to one of claims 1 to 17, **characterized in that** the porous layer(s) present is/are a porous film, a grid, a powder deposit, a fabric, or preferably a nonwoven or web.

19. Precursor material of a reinforcement material according to any of claims 1 to 18, **characterized in that** it includes a fiber reinforcement associated, on at least one of its faces, with a polymer porous layer including or composed of a thermoplastic polymer carrying cross-linkable functions.

20. Method for preparing a reinforcement material according to one of claims 1 to 18, **characterized in that** it includes the following successive steps :

a1) having a fiber reinforcement,
a2) having at least one polymer porous layer including or composed of a partially-cross-linked thermoplastic polymer,
a3) associating the fiber reinforcement with the at least one polymer porous layer including or composed of a partially-cross-linked thermoplastic polymer.

21. Preparation method according to Claim 20, **characterized in that** the association of step a3) is obtained by applying at least one porous layer onto the fiber reinforcement, said application being accompanied or followed by heating of the partially cross-linked thermoplastic polymer, resulting in its softening or melting, followed by cooling.

22. Method for preparing a reinforcement material according to any of claims 1 to 18, **characterized in that** it includes the following successive steps:

b1) having a precursor material according to Claim 19, comprising a fiber reinforcement associated on at least one of its faces with a polymer porous layer comprising or constituted by a thermoplastic polymer carrying cross-linkable functions,

b2) cross-linking at least part of the cross-linkable functions present on the thermoplastic polymer.

23. Preparation method according to Claim 22, **characterized in that** the cross-linking of step b2) is performed under the action of heat, or preferably that of UV, gamma, or beta radiation.

24. Preparation method according to Claim 22 or 23, **characterized in that** it includes the following successive steps, upstream of step b1):

c1) having a fiber reinforcement,

c2) having at least one polymer porous layer comprising or constituted by a thermoplastic polymer carrying cross-linkable functions,

c3) associating the fiber reinforcement with the at least one polymer porous layer comprising or constituted by a thermoplastic polymer carrying cross-linkable functions.

25. Preparation method according to Claim 24, **characterized in that** the association of Step c3) is obtained by applying the at least one porous layer onto the fiber reinforcement, said application being accompanied or followed by a heating of the thermoplastic polymer carrying cross-linkable functions, leading to its softening or melting, but not leading to the cross-linking of the cross-linkable functions, then followed by cooling.

26. Use of a reinforcement material according to any of claims 1 to 18, for making a preform or a composite part, in association with a thermoset, thermoplastic resin or a mixture of thermoset and thermoplastic resins, preferably with an epoxy resin injected or infused.

FIG.1

Couche poreuse thermoplastique réticulable

Matériau de renfort

Chaînes polymeriques thermoplastiques

Réticulation partielle

Chaînes polymériques partiellement réticulées

Nœuds de réticulation

FIG.2

Sur le voile seul     Sur le matériau UD voilé

FIG.3

FIG.4

FIG.5

FIG.6

FIG.7

FIG.8

EP 3 713 759 B1

32

Flux de chaleur

Température (°C)

——Voile HX2632    - - -Voile HX2632 traité 100kGy Ebeam

## FIG.9

300

400

2002

2001

## FIG.10

Direction de traction

Bande n°2

Bande n°1

Distance de préformage

## FIG.11

(i)   (ii)   (iii)

(vi)   (v)   (iv)

FIG.12

Diamètre

# FIG.13

cycles de vieillissement

# FIG.14

FIG.15

—○— Matériau 5 comparatif
—▽— Matériau 3 selon l'invention
—□— Matériau 4 selon l'invention

FIG.16

FIG.17

FIG.18

FIG.19

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1125728 A
- US 6828016 B
- WO 0058083 A
- WO 2007015706 A
- WO 2006121961 A
- US 6503856 B
- US 20087435693 A
- WO 2010046609 A
- WO 2010061114 A
- EP 2547816 A
- US 20080289743 A
- US 20078361262 A
- US 20119371604 A
- WO 2011048340 A
- WO 2011086266 A
- EP 1591468 A
- EP 1808468 A
- US 9205630 B
- FR 2761380
- WO 2010067003 A
- WO 2014076433 A1
- WO 2014191667 A

**Littérature non-brevet citée dans la description**

- ASM Handbook. ASM International. 2001
- Textile Structural Composites. **TSU WEI CHOU ; FRANCK.K.KO.** Composite Materials Series. Elsevier Science Publishers B.V, 1989, vol. 3